# FASCICULE DE BREVET EUROPEEN

(11) **EP 1 421 723 B1**
(45) Date de publication et mention de la délivrance du brevet: **14.03.2012**
(21) Numéro de dépôt: 02796286.9
(22) Date de dépôt: 28.06.2002
(51) Int. Cl.: H04J 3/17

(54) **COMPRESSEUR, DECOMPRESSEUR ET PROCEDE DE GESTION DE RESSOURCES**
KOMPRESSOR, DEKOMPRESSOR UND RESSOURCENVERWALTUNGSVERFAHREN
COMPRESSOR, DECOMPRESSOR AND RESOURCE MANAGEMENT METHOD

(30) Priorité: 23.08.2001 FR 0111048
(43) Date de publication de la demande: 26.05.2004
(73) Titulaire: Alcatel Lucent, 75007 Paris (FR)
(72) Inventeur: CHEVALLIER, Emmanuelle, F-78330 Orgeval (FR); FARINEAU, Jean, F-92300 Levallois Perret (FR); CHUBERRE, Nicolas, F-31170 Tournefeuille (FR); Faure, Cécile, 31400 Toulouse (FR)
(74) Mandataire: Nicolle, Olivier
(86) Numéro de dépôt international: PCT/FR2002/002252
(87) Numéro de publication internationale: WO 2003/019834

(56) Documents cités:
- GB-A- 1 341 663
- US-A- 3 760 106
- US-A- 3 811 014
- US-A- 4 418 409
- US-A- 4 592 050
- US-A- 6 144 658

## Description

Le domaine de l'invention est celui des télécommunications. Plus précisément, la présente invention concerne un dispositif de compression de données, destiné à compresser un ensemble de trames d'entrée courantes de données de structure définie selon une pluralité d'intervalles temporels, un premier groupe d'intervalles temporels étant tels que chacun d'eux soit décomposé selon une pluralité de bits d'informations portant respectivement un canal de communication.

L'invention concerne également un dispositif de décompression de données, un bloc de données comprenant un groupe de données comprimée, et un procédé de gestion de ressources de bande passante dans un système de télécommunications entre stations de traffic. Ce système peut particulièrement comprendre un système de télécommunications à allocation dynamique de ressources à la demande incorporant une transmission par satellite. Les voies du satellite sont à allocation de ressources par multiplexage temporel (AMRT ou TDMA en anglais).

Le document GB 1 341 663 A décrit un procédé (et système implémentant le procédé) de compression dans un système de transmission par satellite de signaux de parole. Le schéma de compression décrit dans ce document repose sur l'exploitation des propriétés statistiques du signal de parole numérisé, et sur l'utilisation d'un prédicateur d'ordre zéro.

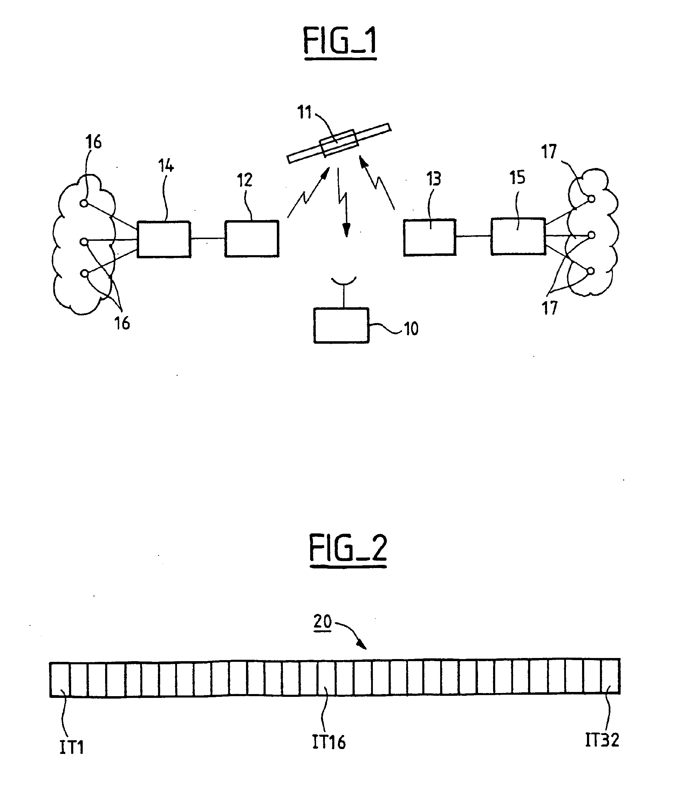

La figure 1 représente un réseau de transmission de données par satellite de type connu. Ce réseau comprend notamment un satellite 11 et un centre 10 de gestion de ressources de communications qui communique par voie hertzienne avec le satellite 11. Des stations de trafic 12, 13, comprenant des terminaux fonctionnant en mode TDMA ou SCPC, communiquent également avec le satellite 11 et sont raccordées à des centres 14, 15 de commutation téléphoniques, publics ou privés, généralement appelés PSTN pour un réseau terrestre (Public Switching Telephone Network). Chaque PSTN 14, 15 est raccordé à une pluralité d'abonnés 16, 17.

Les communications entre les abonnés 16 et les abonnés 17 connectés à des stations de trafic différentes sont établies par le centre de gestion 10 qui alloue dynamiquement des fréquences de transmission (en mode de fonctionnement SCPC) ou des intervalles de temps d'une trame temporelle (en

Ainsi, l'affectation des ressources satellite a lieu à la demande ; lorsqu'un abonné demande une communication, et si sa demande peut être honorée, une voie du satellite est établie entre la station de trafic de départ à laquelle est connecté l'abonné demandeur et une station de trafic d'arrivée à laquelle est connecté l'abonné demandé. Le centre de gestion 10 est également informé de la libération des ressources affectées, c'est à dire en fin de communication.

Le centre 10 assure non seulement la gestion des fréquences satellite mais également la mise à disposition de modems au niveau des stations de trafic de départ et d'arrivée, afin d'établir les liaisons téléphoniques.

Le fonctionnement est généralement le suivant :

En mode de fonctionnement SCPC, le centre de gestion 10 effectue une allocation de fréquences satellite lorsqu'il détecte une prise de ligne par un abonné 16 ou 17, cette prise de ligne étant un signal analogique (fréquence particulière) ou numérique (bit ou mot de signalisation de prise de ligne) transmis par l'abonné au centre de gestion 10 par l'intermédiaire du PSTN 12 ou 13. Les stations de trafic 14 et 15 effectuent une mise en forme des signaux émis par les abonnés pour les transmettre au centre de gestion 10 par l'intermédiaire d'un modem.

Un exemple d'une telle trame est représenté à la figure 2 et référencé 20. La trame 20 est constituée de 32 intervalles de temps de 8 bits chacun, notés IT1 à IT32, le premier intervalle de temps IT1 étant dédié à la synchronisation et à des signalisations particulières, l'intervalle de temps IT16 véhiculant la signalisation de ligne issue du PSTN et les autres intervalles de temps étant réservés aux transmissions des données utiles (numérotation, données de parole,...) émises par les abonnés pour un sens de transmission. Ces abonnés sont par exemple constitués par de simples postes téléphoniques, par des autocommutateurs privés ou par un réseau téléphonique public. Chaque trame a une durée de 125 µs et permet d'assurer un débit de communication à 2 Mbps.

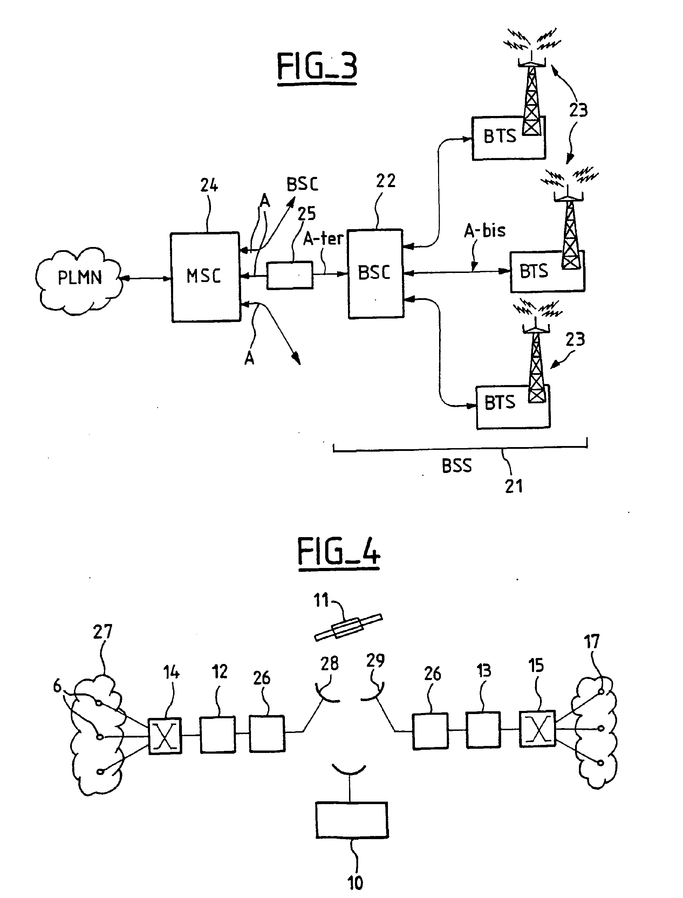

La figure 3 illustre schématiquement une partie de l'infrastructure d'un réseau GSM ("Global System for Mobile communications" en anglais). Il y est illustré le sous-système radio 21 représentant le système de stations de base ou BSS (pour "Base Station System" en anglais) gérant les relais radio émetteurs récepteurs. Un BSS se compose d'une station contrôleur 22 ou BSC (pour "Base Station Controller" en anglais) et d'une ou de plusieurs cellules et donc d'une ou plusieurs stations de base 23 ou BTS (pour " Base Transceiver Station" en anglais). Le BSC gère les ressources radio des stations BTS qui lui sont rattachées, ainsi que les fonctions d'exploitation et de maintenance des stations de base. Il assume de façon autonome les transferts intercellulaires des stations mobiles qui circulent dans sa zone de couverture. En outre, le contrôleur BSC possède, tel qu'illustré sur la figure 3, deux interfaces normalisées, l'une dénommée A-bis avec les stations de base 23 et l'autre dénommée A-ter mettant en relation le BSC avec un centre de commutation mobile 24 ou MSC (pour "Mobile Switching Centre" en anglais) via un transcodeur/unité d'adaptation de taux 25 ou TRAU (de l'anglais "Transcoder / Rate Adaptor Unit"). Celui-ci a pour objet de convertir la parole comprimée à 13 kbps en parole numérisée à 64 kbps, afin de rendre les canaux de parole compatibles du MSC. Ainsi, le couplage MSC- BSC s'opère à un débit standard de 64 kbps côté MSC, et à 16 kbps côté BSC, débit comprenant le débit de la parole comprimée à 13 kbps plus un surdébit constitué par des bits de cadrage et de bourrage. L'interface entre le MSC et le TRAU est nommé interface A ; l'interface entre le TRAU et le BSC est nommé interface A-ter.

Le TRAU 25 est compatible des différents types de signaux transmis au niveau de l'interface A-ter, et ramène à 64 kbps tous ces types de signaux. Ces signaux sont essentiellement la parole, à 16 kbps à plein débit ou à 8 kbps à débit moitié, et la signalisation à 64 kbps ou 16 kbps.

Le MSC est l'interface entre le sous-système radio BSS et un réseau filaire tel qu'un réseau 27 mobile national public ou PLMN (pour public Land Mobile Network" en anglais). Le MSC réalise toutes les opérations nécessaires à la gestion des communications avec les terminaux mobiles. Pour obtenir une couverture radio d'un territoire, un commutateur de réseau mobile pilote un ensemble d'émetteurs, ce qui explique la présence sur la figure 3 de plusieurs interfaces A-ter avec d'autres BSS.

L'interface A-bis effectuant la liaison entre les BTS et les BSC du système est établie via une interface synchrone E1 opérant avec un tramage de type G.703 (on parlera de trames E1). Une fraction de chaque trame porte des données utiles.

On notera que l''extension par satellite d'un réseau GSM obtenue par un déport par satellite, telle que proposée notamment dans la suite, est établie de manière indifférente soit au niveau de l'interface A-bis, soit au niveau de l'interface A-ter, soit éventuellement au niveau de l'interface A.

Quelle que soit l'interface retenue pour le déport par satellite, le nombre de canaux de transmission utilisés (intervalles de temps ou sub-divisions de ces intervalles de temps) est fixe, dépendant essentiellement de la configuration physique du BSS (nombre de BTS, nombre de porteuses). Par contre, à un instant donné, seule une partie de ces canaux de transmission est active ; leur nombre dépend de la signalisation à véhiculer, du nombre de communications établies, et de l'alternat naturellement lié au dialogue entre correspondants.

Afin de minimiser les besoins en bande passante nécessaire pour la communication satellite pour le déport, le système de télécommunications considéré pour le déport, opère en mode DAMA, c'est à dire que les ressources satellite consacrées à un instant donné pour la liaison dépendent du débit des données à transmettre, c'est à dire du nombre de canaux actifs au sein des trames à transmettre.

Les équipements qui permettent de faire du DAMA opèrent suivant deux modes différents :
- soit, ces équipements interprètent la signalisation (SS7 par exemple) afin de détecter l'activation de nouveaux canaux de transmission afin d'adapter les allocations de ressources de transmission en conséquence (variation de la bande allouée pour une liaison donnée); dans ce cas, la signalisation n'est pas une signalisation standard, et faire fonctionner le DAMA en fonction de la signalisation véhiculée serait complexe et dépendrait du fournisseur d'équipement, l'interface A-bis entre le BSC et le BTS n'étant pas standardisée,
- soit, ces équipements sont à interface de type Ethemet, ATM, voire Frame Relay. Dans ce cas, le processus de DAMA opère de manière plus simple, puisqu'il se base sur le débit moyen présent sur le canal de transmission pour ajuster les allocations de ressources de transmission. II est à noter que dans le cas présent, le débit est invariant, car indépendant du taux d'activité des canaux à transmettre via le satellite, égal typiquement à 8 x 16 kbps par porteuse transmise par la BTS.

Ce second type de DAMA, basé sur la mesure ou la détection des variations de débit est préféré, car il permet d'éviter d'avoir à interpréter la signalisation véhiculée sur l'interface déportée pour faire varier les allocations de bande satellite. Cependant, l'interface à déporter n'étant pas directement compatible de l'équipement de transmission du système, un dispositif intermédiaire est utilisé, nommé transcodeur.

Une double nécessité s'impose pour ce transcodeur : d'une part, celui-ci doit pouvoir extraire à partir des trames synchrones les données utiles, correspondant à des canaux de transmission actifs, et celles-ci uniquement, puis les encapsuler dans des trames Ethemet, paquets IP ou cellules ATM. Ces éléments sont appliqués à l'équipement de transmission du BSC, qui peut ainsi offrir le bénéfice du DAMA.

D'autre part, le transcodeur doit également pouvoir restituter le synchronisme en bout de chaîne de transmission, dans la mesure où le processus introduit à partir des opérations d'extraction des données utiles des trames synchrones et d'encapsulation casse complètement la séquence des trames d'origine. En conséquence, le transcodeur doit permettre de reconstituer à l'identique les trames telles qu'elles étaient à la source.

Pour permettre le bénéfice des fonctionnalités de DAMA offertes par les équipements de transmission, il faut que les trames E1 soient converties en trames Ethernet, en paquet IP ou en flux ATM. Or, les transcodeurs connus permettant l'adaptation E1-Ethernet, EL-IP ou encore E1-ATM ne compriment pas les trames E1 à transmettre. Que les trames E1 portent des données valides ou non, le débit résultant est constant; ces transcodeurs ne permettent donc pas de réduire la bande passante satellite en fonction de l'activité effective des canaux de transmission du réseau GSM ; la raison pour laquelle ces transcodeurs ne tiennent pas compte de l'activité réelle des canaux transmis tient au fait qu'ils constituent des solutions de conversion d'interface physique, ils n'effectuent pas l'analyse du contenu de la trame.

La présente invention a donc notamment pour but de résoudre les inconvénients cités ci-dessus, particulièrement mais de façon non limitative, dans un système de transmission fonctionnant selon un mode de type DAMA.

De façon plus générale, un des objectifs de l'invention est de fournir un dispositif de compression qui permette d'optimiser la bande de fréquence pour la transmission des données à transmettre.

A cet effet, l'invention a pour objet un dispositif de compression de données, destiné à compresser un ensemble de trames courantes de données d'un flux de données, ces trames étant de structure définie selon une pluralité d'intervalles temporels, un premier groupe d'intervalles temporels étant tels que chacun d'eux soit décomposé selon une pluralité de bits d'informations portant respectivement un canal de communication,
caractérisé ce que ledit dispositif de compression comprend:
- des moyens de transmission d'un motif de référence comprenant les N trames précédant l'ensemble de trames courantes, avec N entier supérieur à 1, - des moyens d'analyse de l'état actif ou statique d'au moins un canal compris dans une fenêtre d'analyse des trames courantes, l'état actif, respectivement statique, de ce canal lui étant attribué lorsque la comparaison du contenu de ce canal dans les mêmes N bits comparés dans les N trames d'un motif de référence avec les N bits correspondants des N trames de la fenêtre d'analyse montre une variation de contenu pour au moins l'un des bits, respectivement une stabilité de contenu pour l'ensemble des N bits,
- des moyens d'extraction du contenu des canaux actifs de la fenêtre d'analyse en fonction des états actifs des bits fournis par lesdits moyens d'analyse,
- des moyens de localisation aptes à fournir des indications de localisation desdits bits actifs et statiques dans la trame courante en fonction des états actifs et statiques des bits fournis par lesdits moyens d'analyse,
- des moyens de regroupement d'un identifiant du bloc courant, du contenu des bits actifs et de leur localisation respective au sein d'un bloc de données à émettre.

Ainsi, le dispositif de compression selon l'invention permet de gagner significativement en bande de transmission. Ce gain en bande passante peut atteindre 50% en fonction du taux de remplissage des trames de données d'entrée, c'est à dire du nombre de bits actifs. Plus particulièrement, dans le cadre d'un système de télécommunications par satellite entre stations de traffic fonctionnant selon un mode DAMA et dans lequel le présent dispositif de compression selon l'invention serait implémenté, le gain en bande passante serait en fonction du nombre de stations de traffic, comme il sera explicité dans la suite. Selon l'esprit de l'invention ainsi exposé, le flux de sortie du dispositif de compression présente un débit variable qui est fonction du nombre de bits actifs analysés. En appliquant ce flux sur un équipement de transmission opérant en mode DAMA, les ressources en bande passante de la liaison établie pour l'équipement sont adaptées quasiment en temps réel en fonction des besoins effectifs de la liaison.

Selon un mode de réalisation de l'invention, le dispositif selon l'invention comprend des premiers moyens de mémorisation des N trames précédant la fenêtre d'analyse courante formant le motif de référence.

Selon un mode de réalisation de l'invention, le dispositif selon l'invention comprend des seconds moyens de mémorisation des trames courantes formant la fenêtre d'analyse.

Selon un mode de réalisation de l'invention, la fenêtre d'analyse a une longueur de L*N trames, avec L ≥ 1, de telle sorte que, pour l'analyse, les bits sont regroupés par blocs de N bits formant ainsi L blocs de N bits et en ce que pour chaque bit correspondant spatialement au sein des L blocs se succédant, la répétition des mêmes contenus entraîne une décision d'inactivité du bloc de N bits.

Selon un mode de réalisation de l'invention, le dispositif selon l'invention comprend des moyens d'identification de trames pour fournir un identifiant propre à chaque trame compressée.

Selon un mode de réalisation de l'invention, lesdits moyens de localisation comportent des moyens de génération d'un code d'états significatif des états respectifs desdits bits des trames d'entrée.

Selon un mode de réalisation de l'invention, lesdits moyens d'analyse comprennent des moyens de comparaison du contenu de la fenêtre d'analyse avec celui du motif de référence, des moyens de détection de variation d'états en fonction de ladite comparaison et des moyens de détermination de l'état actif ou statique de chacun des bits, respectivement des blocs de N bits.

Selon un mode de réalisation de l'invention, les moyens de détermination comprennent des troisièmes moyens de mémorisation pour mémoriser un nombre L correspondant au nombre de blocs de bits de largeur N à considérer avant qu'un bloc soit identifié comme passant de l'état actif à celui de statique.

Selon un mode de réalisation de l'invention, le dispositif selon l'invention comprend des quatrième moyens de mémorisation pour mémoriser plusieurs blocs de données avant de procéder à l'émission.

Selon un mode de réalisation de l'invention, lesdits moyens de regroupement comprennent un gestionnaire de données de bourrage, apte à gérer des données à transmettre de façon complémentaire dans le bloc par rapport aux données comprises dans ledit premier groupe d'intervalles temporels.

Selon un mode de réalisation de l'invention, le dispositif selon l'invention comporte une pluralité de sorties pour émission des blocs de données, chaque sortie offrant un débit prédéterminé, le dispositif étant préprogrammé de manière à diriger les blocs de données vers les sorties de manière sélective selon leur niveau respectif de saturation de débit.

Selon un mode de réalisation de l'invention, le dispositif selon l'invention comporte une première sortie à débit fixe et une sortie à débit variable apte à recevoir le bloc de données.

Selon un mode de réalisation de l'invention, le dispositif selon l'invention comporte au moins trois sorties, une première à débit fixe, une seconde à débit fixe et qui est activée dès que le débit excède la capacité de celui offert sur la première sortie, et une troisième sortie qui est activée à la place de la seconde dès que la capacité disponible sur les première et seconde sorties apparaît à son tour insuffisante, l'activation alternative des première et seconde sorties permettant d'augmenter, respectivement de décroître, par pas prédéterminés la capacité allouée à la liaison à laquelle le dispositif de compression est relié en fonction des besoins courants.

La présente invention a également pour objet un dispositif de décompression de données, destiné à décompresser un bloc de données compressées, ledit bloc de données comprenant un groupe de données compressées à partir d'un ensemble de trames courantes de données de structure définie selon une pluralité d'intervalles temporels, un premier groupe d'intervalles temporels étant tels que chacun d'eux soit décomposé selon une pluralité de bits portant respectivement un canal de communication, caractérisé en ce qu'il comprend des moyens de mémorisation d'un motif de référence reçu comportant les N trames précédant le bloc courant de données comprimées, N > 1,
et étant entendu que l'état actif, respectivement statique, de ce canal lui étant attribué lorsque la comparaison du contenu de ce canal dans les N bits comparés entre les N trames du motif de référence avec les N bits correspondants des N trames de la fenêtre d'analyse montre une variation de contenu pour au moins l'un des bits, respectivement une stabilité de contenu pour l'ensemble des N bits, le dispositif de décompression comprend :
- des moyens de détection d'indications de localisation des bits actifs du groupe de données dans un groupe de données du bloc,
- des cinquième moyens de mémorisation desdites indications de localisation des éléments actifs,
- des moyens d'insertion des bits statiques et actifs détectés en fonction de leur localisation respective indiquée, de manière à reformer les trames courantes.

La présente invention a également pour objet un procédé de gestion de ressources de bande passante selon la revendication 15.

Selon un mode de réalisation de l'invention, l'information représentative des bits actifs transmise provient d'une requête de ressources de ladite au moins station à destination du centre de gestion, destinée à faire varier les ressources de transmission de la station chaque fois qu'un bit passe de l'état actif à statique, ou réciproquement.

Selon un mode de réalisation de l'invention, l'étape de réception de l'information représentative des bits actifs analysés fait suite à une étape de détection des bits actifs sur la liaison de transmission de la station dans le système.

Selon un mode de réalisation de l'invention, l'étape d'allocation de ressources consiste à déterminer une taille de blocs de données et/ou une période de transmission conférée à la station sur la liaison qui est en fonction de ladite information, pour permettre une transmission d'au moins les bits actifs.

Selon un mode de réalisation, l'étape d'allocation de ressources pour la station s'effectue en fonction de ladite information à partir de laquelle une marge supplémentaire est pris en compte de façon opportune entre le nombre de bits et le dimensionnement des ressources allouées à chaque liaison des stations du système. Ceci permet de prendre en compte le fait que l'allocation de ressources s'établit de manière cyclique, généralement en fonction des statistiques établies depuis le cycle d'allocation précédent relatives au nombre d'éléments actifs. Ce cycle se mesure couramment de l'ordre de la seconde ou de plusieurs secondes, alors qu'au cours d'une telle période, le nombre de bits actifs peut augmenter d'une manière significative pour une liaison donnée. La marge établie lors de l'allocation de ressources est destinée à prévenir tout risque de débordement, où le nombre de bits actifs dépasserait le quota de ressources de transmission allouées à la liaison considérée. Cette marge réduisant le gain apporté par la fonction de DAMA, un compromis est adopté entre le risque de dépassement et la somme des ressources allouées à l'ensemble des liaisons.

Selon un mode de réalisation, ledit système comprend un gestionnaire de données complémentaires apte à ajouter des données complémentaires sur la liaison établie pour ladite au moins station lui assurant ainsi une marge de ressources.

D'autres caractéristiques et avantages de l'invention apparaîtront à la lecture de la description des modes de réalisation suivants, donnés à titre illustratif et non limitatif, et des dessins annexés, dans lesquels :
la figure 1, déjà décrite, représente un réseau de transmission de données par satellite de type connu,
la figure 2, déjà déjà décrite, représente une trame issue d'un centre de commutation et appliquée à une station de traffic, selon l'art antérieur,
la figure 3, déjà décrite, illustre schématiquement une partie, comprenant le sous-système radio, de l'infrastructure d'un réseau GSM,
la figure 4 illustre un système de transmission de données par satellite selon un premier mode de réalisation de l'invention,
la figure 5 illustre l'agencement d'un dispositif d'émission/réception de signaux pour satellite au sein d'une infrastructure de réseaux cellulaires du type GSM,
la figure 6 représente la structure de trame à transmettre sur l'interface A-bis ou A-ter,

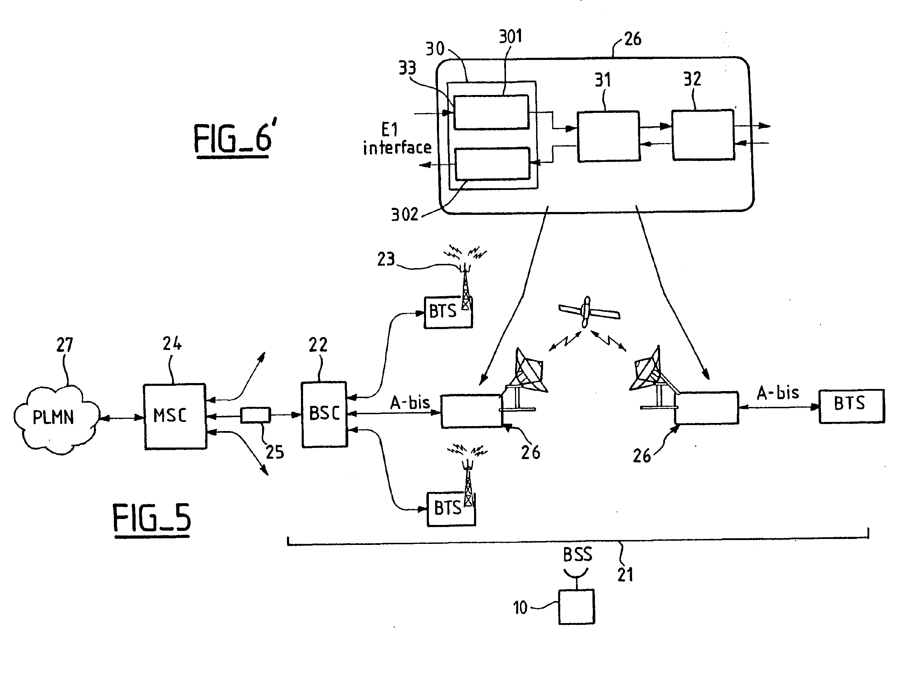

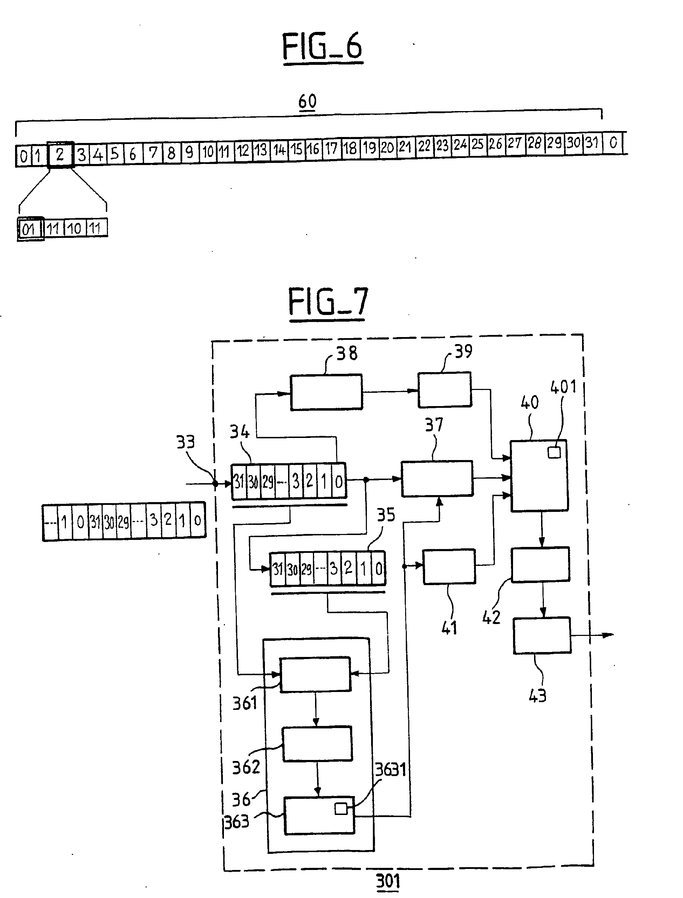

la figure 6' représente un dispositif d'émission/réception de signaux comprenant un compresseur et un décompresseur selon un mode de réalisation de l'invention décrite dans la demande de brevet de priorité déposée par la Demanderesse référencée FR n°01 11 048, ci-après appelée demande de priorité,
la figure 7 illustre un dispositif de compression de trames, selon un mode de réalisation de l'invention de la demande de priorité,

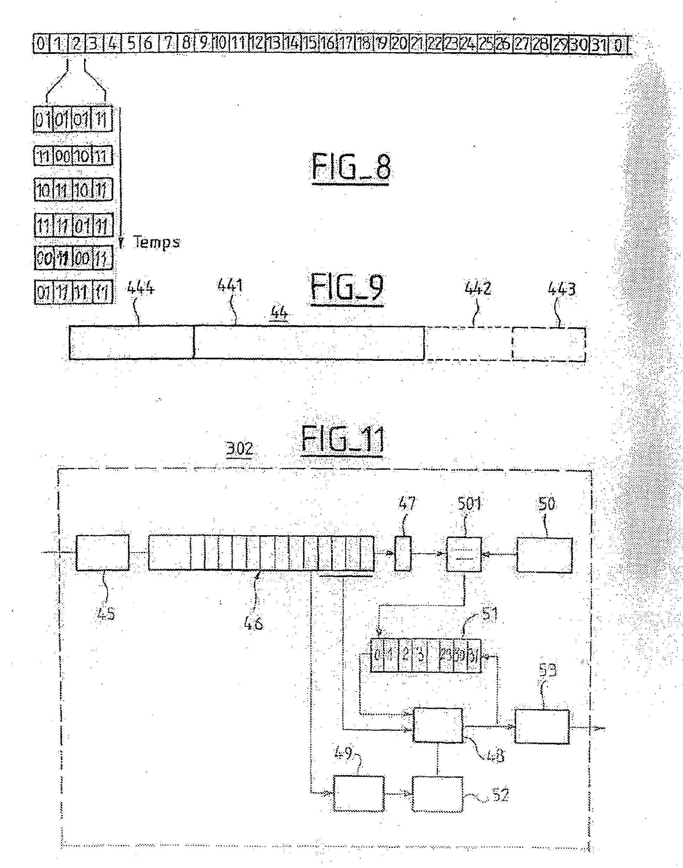

la figure 8 illustre le principe de comparaison, selon un mode de réalisation de l'invention de la demande de priorité, pour un intervalle temporel donné de son contenu sur plusieurs trames consécutives,
la figure 9 illustre la structure d'un bloc de données délivré par le bloc de restitution du compresseur selon un mode de réalisation de l'invention de la demande de priorité,

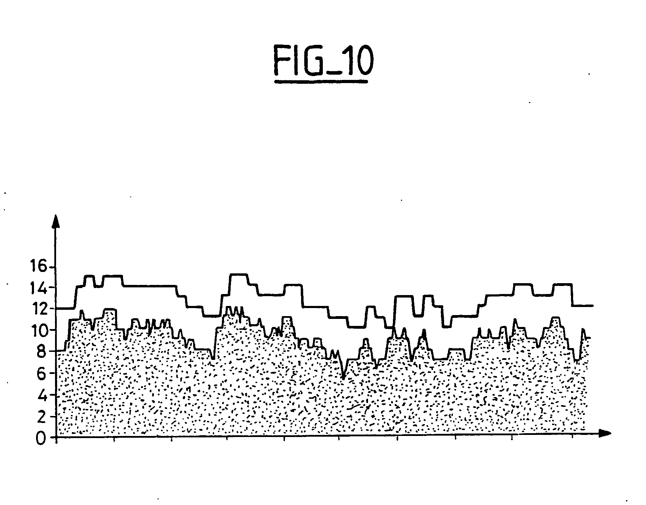

la figure 10 représente les variations de traffic sur une station de traffic pour 16 communications vocales simultanées,
la figure 11 illustre un dispositif de décompression de blocs de données, selon un mode de réalisation de l'invention de la demande de priorité,

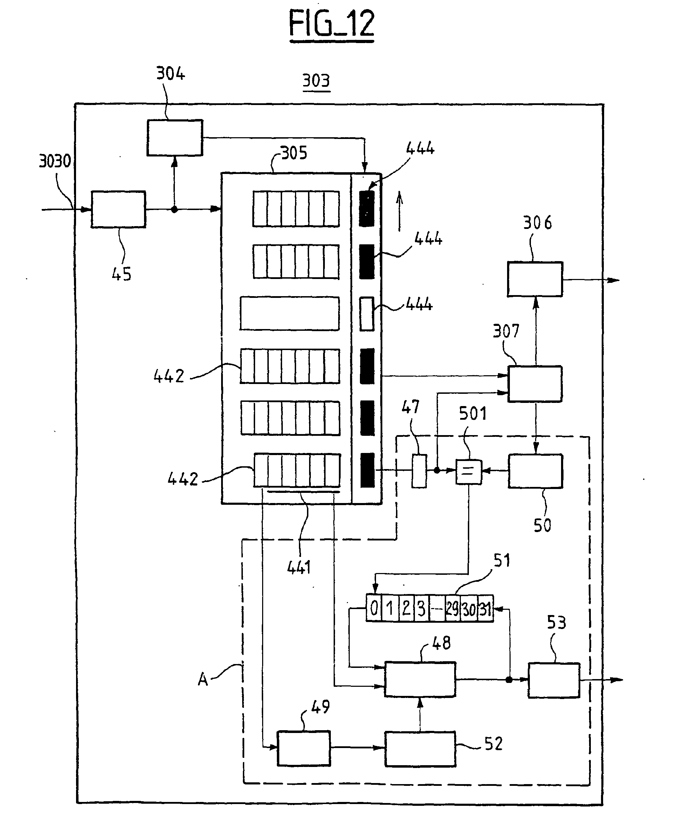

la figure 12 illustre une variante du dispositif de décompression de blocs de données de la figure 11,

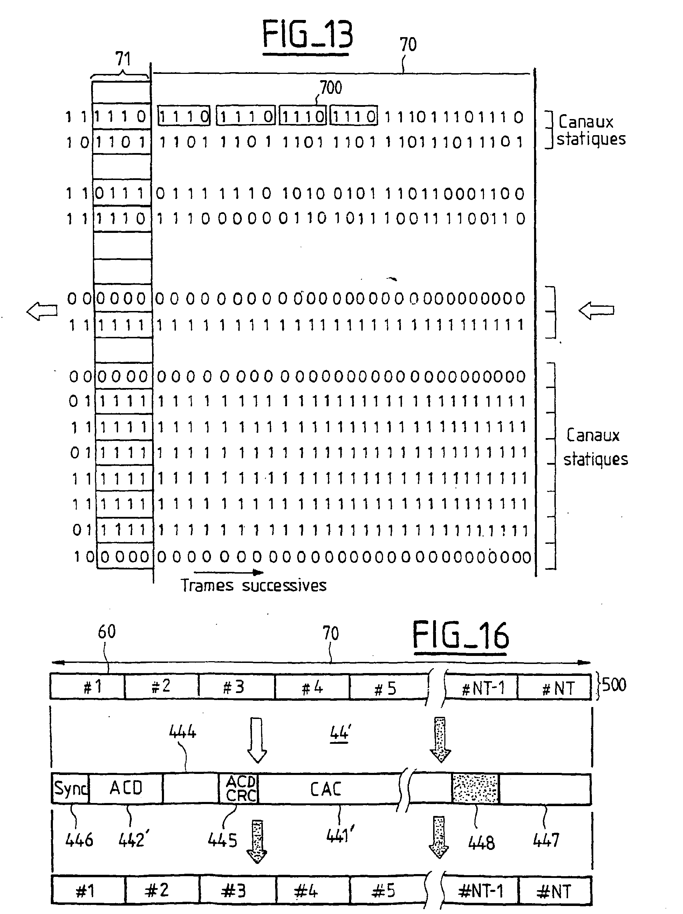

la figure 13 illustre schématiquement le principe de fonctionnement du peocédé de compression selon la présente invention,

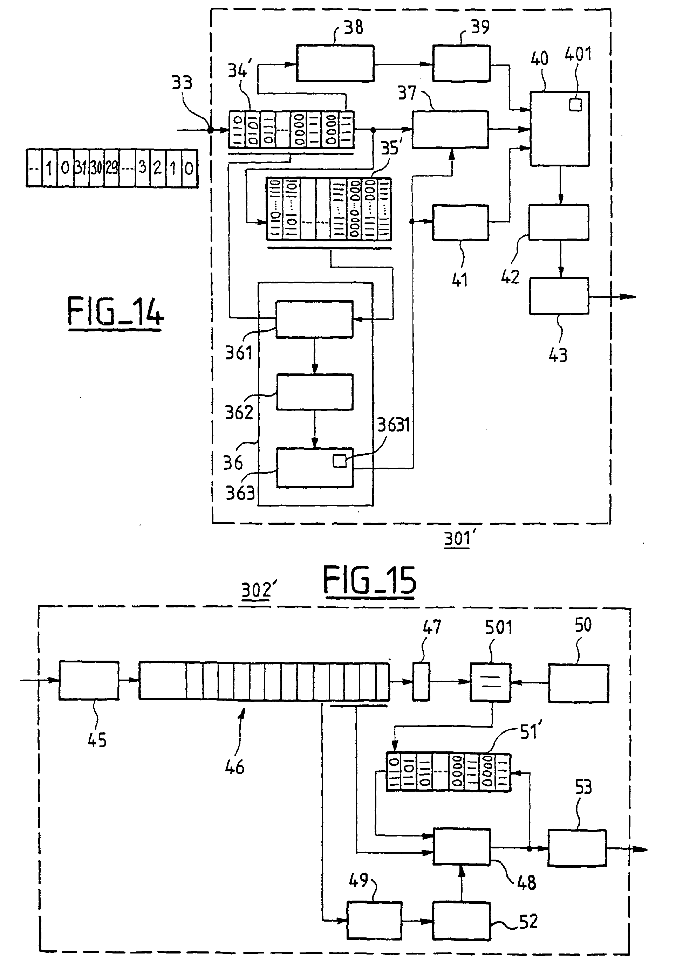

la figure 14 représente un mode de réalisation du dispositif de compression selon l'invention,
la figure 15 représente un mode de réalisation du dispositif de décompression selon l'invention,
la figure 16 représente un mode de réalisation d'une trame compressée ou bloc de données compressées selon l'invention,

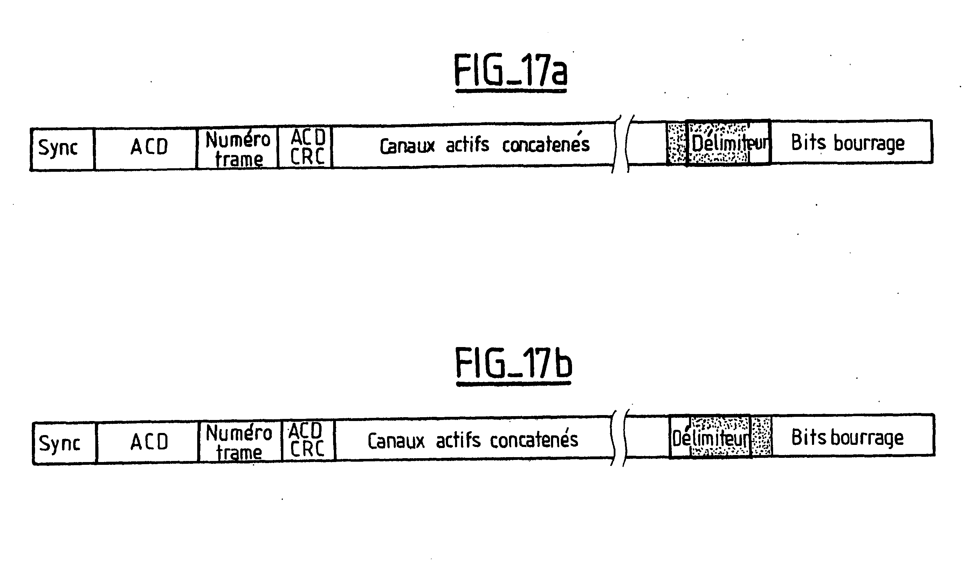

les figures 17a et 17b représentent des configurations de production d'erreurs survenues sur la trame compressée,

Dans la présente demande, les éléments remplissant des fonctions identiques ou équivalentes porteront les mêmes références.

On notera que, nonobstant l'intégration du contenu de la demande de priorité due à son fort intérêt, l'invention de la présente demande n'est décrite qu'à partir de la figure 13.
La figure 4 reprend les éléments du système de télécommunications de la figure 1. Le système comprend deux centres de commutation téléphonique 14, 15, chaque centre étant relié d'une part à une pluralité d'abonnés 16, 17 et d'autre part à une station de traffic 12, 13 respectivement. Les centres de commutation fournissent des trames à 2Mbits/s telles que représentées à la figure 2 et qui seront détaillées plus précisément à la figure 6 en relation à la figure 5. Chaque station de trafic 12, 13 est reliée à un dispositif 26 d'émission/réception de signaux relié respectivement à une antenne satellite 28, 29.
La figure 5 illustre l'agencement du dispositif 26 au sein d'une infrastructure de réseaux cellulaires du type GSM. On notera que le dispositif 26 peut être compris dans le BSC 22, voire être agencé sur l'interface A-ter.

Le dispositif 26 est illustré de façon plus détaillée sur la figure 6'. Il comporte un premier couple d'entrée/sortie relié à l'interface E1 connectée au BSC 22. Ce couple d'entrée/sortie est relié à un dispositif 30 de compression/décompression de trames qui sera détaillé dans la suite. Ce dispositif est par ailleurs relié à un modem 31 destiné à assurer l'émission/ réception en full-duplex d'intervalles de temps, le mode de transmission étant du TDMA. Le modem 31 est relié aux entrée/sortie d'un bloc 32 de traitement radio de signaux qui est relié à l'antenne 28, 29 respectivement.

Le système comporte également, de façon connue, un centre de gestion de ressources 10, et un satellite 11 par lequel les communications entre les stations transitent.

Une première entrée du dispositif 26 est reliée à une première entrée du premier couple du dispositif 30 reliée à une entrée d'un dispositif 301 de compression de trames et fournissant un signal de sortie à une première sortie du dispositif 30 vers le modem 31 alors qu'une seconde entrée du dispositif 30 relie le modem à un dispositif 302 de décompression de trames du dispositif 30 délivrant un signal de trames décompressées vers une sortie du dispositif 26 vers le BSC. Dans la suite, dans un souci de concision, le dispositif de compression de trames sera dénommé compresseur alors que le dispositif de décompression de trames sera dénommé décompresseur.

Le compresseur 301 assure la compression des trames à transmettre et l'adaptation du format des blocs de données résultant à l'interface offert par le modem 31 en mode d'émission, à savoir une interface Ethemet, IP ou ATM.

Le décompresseur 302 assure l'adaptation à l'interface offert par le modem 31 en mode de réception (généralement identique à celui utilisé côté modem d'émission), ainsi que la restitution des trames telles qu'appliquées en entrée du compresseur.

La figure 6 illustre la structure typique d'une trame 60 à transmettre sur l'interface A-Bis ou A-ter des réseaux cellulaire du type GSM. On notera que la présente invention ne se limite pas à une telle interface et s'étend à tout autre type d'interface, notamment celles relatives à des réseaux non cellulaires.

Chaque trame se décompose en un nombre fixe d'intervalles temporels ("Time slot" en anglais), et en l'occurrrence 32 intervalles de temps pour des trames E1 conformément aux recommandations G.703 / G.704 de l'ITU-T, chaque intervalle de temps portant un octet. L'intervalle de temps référencé 0 est réservé à la synchronisation de la transmission des trames, en vue de synchroniser la réception des trames du côté de l'équipement destinataire. De manière générale, la fréquence trame est de 8 kHz, ce qui permet de véhiculer 31 canaux à 64 kHz, à raison d'un canal par intervalle.

Dans le cadre présent de l'extension par satellite de réseaux cellulaires, chaque octet se décompose de la manière suivante :
- soit chaque octet comporte 4 doublets (un doublet étant un échantillon de 2 bits, appelé "nibble" en anglais), où chaque doublet porte un canal à 16 kbps ; c'est le cas notamment pour la transmission de la voie, comprimée à 16 kbps sur l'interface A-Bis et A-Ter,
- soit chaque octet transporte 8 canaux vocaux comprimés en débit moitié, chaque bit correspondant dans ce cas à un canal vocal,
- soit l'octet n'est pas subdivisé, ce qui est le cas pour la transmission des données dans le système "Global Packet Radio Service" dit GPRS (canaux de données utilisateur à 64 kbits/s) ou pour la transmission de la signalisation,
- d'autres formes alternatives peuvent exister : par exemple 2 canaux de 32 kbps, 1 canal à 32 kbps et 2 canaux à 16 kbps, etc.

La figure 7 illustre le compresseur 301 selon un mode de réalisation de l'invention de la demande de priorité.

Le fonctionnement du compresseur est décrit ci-après:

Dans un premier temps, il extrait le contenu de chaque trame. Pour cela, il se synchronise sur l'intervalle de temps de référence 0 et extrait les données présentes dans les intervalles de temps qui le suivent.

Ensuite, il effectue une compression des données extraites au sein de la trame. Ce processus dépend de la structure de chaque intervalle de temps. Deux démarches sont envisagées à cette fin :
- la structure de la trame (nombre d'intervalles temporels utilisés et position de ces intervalles temporels au sein de la trame) et la structure de chaque intervalle temporel sont définies par configuration : 4 canaux à 16 kbits/s (structure en doublets), puis 8 canaux à 8 kbits/s (structure en bits), puis 1 canal à 64 kbits/s, ...
- ou le compresseur détermine de lui-même la structure de chaque intervalle temporel par apprentissage, en analysant de manière statistique les évolutions de chaque bit et en corrélant avec les évolutions des bits voisins, afin d'identifier des corrélations dans les changements d'état ; il est convenu que la configuration de la structure des trames transmises n'évolue généralement pas, et qu'un apprentissage peut ainsi être opéré afin d'éviter d'avoir à configurer le compresseur en fonction du cas d'utilisation.

La figure 7 représente le dispositif 301 de compression de trames selon un mode de réalisation de l'invention de la demande de priorité. Le principe de compression réalisé par le compresseur est le suivant : la structure de l'intervalle temporel étant connue, le compresseur compare le contenu de l'intervalle de la trame courante par rapport au contenu de ce même intervalle sur les trames précédentes. Ce principe est schématisé à la figure 8 où il est illustré le principe de comparaison pour l'intervalle temporel de référence 2 et sur une longueur temporelle de 6 trames.

Les trames de données entrent par l'entrée 33 du compresseur 301 qui est reliée à l'entrée du premier couple d'entrée/sortie du dispositif 26. Cette entrée 33 est reliée à une mémoire tampon 34 de trames ("buffer" en anglais) mémorisant la trame courante et fonctionnant selon une logique FIFO (de l'anglais "First In First Out"). Cette mémoire tampon 34 est reliée en sortie à une entrée d'une mémoire 35 de stockage de la trame précédente à la trame courante présente dans la mémoire 34. La mémoire 34 est également reliée en sortie à une entrée d'un bloc 36 d'analyse, laquelle entrée est reliée dans le bloc 36 à un bloc 361 de comparaison. Ce bloc 361 est ainsi destiné à comparer la trame courante avec la trame précédente à celle-ci qu'il reçoit sur une seconde entrée reliée à une sortie de la mémoire 35 de stockage. Le bloc 36 d'analyse comprend également un bloc 362 de détection de variations d'état relié en entrée à la sortie du bloc 361 de comparaison et une machine d'état 363 reliée à la sortie du bloc 362 de détection et destinée à déterminer les états actif ou statique de chacun des éléments transmis (par exemple les doublets transmis), comme il sera vu ci-après. La mémoire 34 fournit également en sortie la trame courante à l'entrée d'un extracteur 37 d'éléments actifs, ce dernier étant relié en entrée à la sortie de la machine d'état 363 du bloc d'analyse. La machine d'état est reliée en sortie parallèlement à un encodeur d'état 41 destiné à fournir des codes compacts d'identification de position des éléments actifs, ceci étant réalisé de façon systématique en fonctionnement ou sur détection de changement d'état d'activité des éléments constitutifs de la trame. Enfin, la mémoire 34 est reliée en sortie à l'entrée d'un bloc 38 de synchronisation de trames dont la sortie est reliée à l'entrée d'un compteur 39 de trames. Ce compteur 39 délivre un numéro propre à la trame courante à une première entrée d'un bloc 40 de regroupement de données construisant des blocs de données regroupant des données propres à la trame courante. Le numéro fourni par le compteur 39 permet l'identification de la trame courante. Une seconde entrée du bloc 40 de regroupement est reliée à la sortie de l'extracteur 37 alors qu'une troisième entrée est reliée à la sortie de l'encodeur 41.

Le bloc 40 de regroupement construit un bloc de données selon une méthode qui sera détaillée dans la suite et fournit ce dernier en sortie à une mémoire tampon 42 de sortie. De préférence, plusieurs blocs sont concaténés dans cette mémoire 42 avant transmission à une interface physique 43 de sortie du compresseur 301 assurant l'adaptation au type d'interface utilisé pour le couplage avec le modem 31 d'émission (Ethernet, IP, ou ATM).

Le procédé de compression mis en oeuvre par le compresseur implémente les étapes suivantes :
Le bloc d'analyse 36 analyse les variations de contenu, en se basant sur la structure de la trame établie par configuration dans le cas présenté (par exemple doublet par doublet pour une trame structurée en doublets), et détecte les variations d'état. Ceci est réalisé au sein du bloc d'analyse en comparant dans le bloc de comparaison chaque doublet avec son doublet correspondant de la trame précédente au moins, le résultat étant fourni au bloc de détection 362 qui détecte et fournit des états d'activité, actif ou statique, à la machine 363, selon qu'il y a eu variation d'état du doublet ou non. Lorsqu'un doublet ne varie pas un nombre fixé de fois, par exemple trois fois (nombre de fois pouvant être beaucoup plus élevé, configurable dans la machine d'état 363), la machine d'état 363 transmet au bloc 40, via l'encodeur d'état 41, que le contenu de ce doublet n'est plus actuatisé ; le doublet est alors considéré comme étant à l'état statique. Le compresseur stoppe alors la transmission du doublet concerné.

A l'inverse, dès qu'un doublet change d'état alors qu'il était détecté comme statique, la transmission de son contenu est rétablie sans délai, la machine d'état transmettant au bloc 40 via l'encodeur d'état, un code compact d'activation d'état du doublet.

Les codes qui sont transmis au bloc 40 sont représentatifs des variations d'état des éléments (en l'occurrence les doublets) et sont fonction de la structure de ces éléments. Selon une convention (qui peut être évidemment inversée ou modifiée), un 1 signale qu'un élément est actif, un 0 signale qu'un élément est statique, au sein d'une chaîne de bits représentant l'état des éléments transmis ; par exemple, pour un ensemble de deux intervalles temporels consécutifs transportant chacun quatre doublets, on pourrait avoir la combinaison suivante de codes : 1010 1111 soit AF en valeur hexadécimale. Cette suite est représentative de six doublets actifs et de deux doublets inactifs (ceux affectés du code 0). Le code indicatif de changement d'état est transmis sans délai, dès qu'un élément de la trame passe de l'état statique à l'état actif.

Afin de ne pas surcharger les trames transmises en signalisation de changement d'état, une temporisation est mise en place pour les indications de passage d'un ou plusieurs éléments de l'état actif à l'état statique. D'une part, le compresseur dispose d'une mémoire 3631 préprogrammée de la machine d'état 363 qui compte au minimum trois trames (par exemple) pour vérifier l'identicité de l'élément considéré sur les trois trames, mais en plus la mémoire tampon 42 du compresseur conserve au minimum N trames par rapport à l'indication de changement d'état précédente ; ceci permet d'espacer les signalisations de changement d'état et évite de surcharger la liaison.

A l'inverse, dès qu'un élément passe de l'état statique à l'état actif, la machine d'état est programmée de manière à transmettre de façon immédiate le code de changement d'état de la trame.

Le code de changement d'état de la trame, ou code d'état, comporte tous les codes d'état des éléments portés par la trame, uniquement pour les intervalles temporels utilisés, ces codes d'état étant élaborés selon la méthode définie ci-dessus.

Par exemple, pour une trame utilisée pour transporter deux intervalles temporels, le code 00AF délivré par l'encodeur signifie que tous les éléments du premier intervalle temporel sont statiques alors que ceux du second intervalle temporel sont actifs excepté les doublets 2 et 4 (exemple vu ci-dessus 1010 1111). De cette sorte, le code de changement d'état, dit code d'état dans la suite, sert d'indication de localisation des éléments actifs de la trame. Ce code d'état est fourni par l'encodeur 41 sur les informations d'état en sortie de la machine d'état.

Les doublets pouvant par conséquent avoir deux états exclusifs stables, respectivement statique ou actif, seuls sont transmis par le bloc de regroupement les doublets qui lui ont été signalés comme actifs, en rajoutant des bits de bourrage pour compléter le bloc de données en fonction des contraintes de l'interface utilisée. Ces bits de bourrage sont gérés par un gestionnaire 401 de bits de bourrage interne au bloc de regroupement. Ces bits de bourrage feront l'objet d'explications plus détaillées dans la suite. On remarquera qu'au lieu d'informations de bourrage non utiles, il est possible d'utiliser cet espace de la trame pour y répéter des données critiques pour la restitution efficace des trames, telles que le code d'état ou le numéro de trame.

La figure 9 illustre la structure d'un bloc de données 44 délivré par le bloc 40 de regroupement du compresseur. Le bloc 44 comprend un bloc 441 de données comprimées comportant les doublets à transmettre, un code d'état de la trame courante, par exemple 00AF. Ce code d'état est représentatif de la position des éléments actifs au sein de la trame considérée.

Pour signaler un changement d'état au dispositif de décompression à l'autre bout de la chaîne de transmission (dispositif de décompression qui sera explicité dans la suite), le compresseur ajoute par l'encodeur 41 ou le bloc 40, au code d'état de la trame courante, par exemple 00AF, un code spécifique 443 signalant la présence d'un code d'état 442 au sein du bloc, ce qui signifie que le bloc de données transmis correspond à un cas de changement d'état. Selon une variante, il n'est pas joint de codes spécifiques tels que spécifiés ci-dessus accompagnant le code d'état de la trame courante mais le décompresseur détecte l'adjonction du code d'état par analyse de la longueur du bloc de données reçues. Dès que le bloc présente une longueur différente, le décompresseur est capable d'en déduire qu'un code d'état est présent en fin de bloc.

De plus, un numéro de trame 444 est adjoint en tête du bloc de données comprimées, destiné à garantir la synchronisation de la décompression des données et la prise en compte des cas de pertes de bloc de données dans la chaîne de transmission. Ce numéro de trame est comptabilisé modulo la capacité du compteur utilisé à cet effet (8 bits ou 16 bits par exemple).

Le bloc de données ainsi constitué est encapsulé dans la trame Ethernet, le paquet IP, ou la cellule ATM, en fonction du mode de transmission adopté.

De préférence, plusieurs blocs sont concaténés dans la mémoire tampon 42 avant encapsulation afin de réduire le surdébit lié à l'encapsulation.

L'interface physique 43 de sortie assure l'adaptation au type d'interface utilisé pour le couplage avec le modem d'émission (Ethernet, IP, ATM).

On notera que l'avantage du choix du protocole IP vis à vis d'Ethernet est qu'il permet d'inclure des fonctions de routage optimisé et de reroutage automatique en cas de défaut d'une liaison.

On revient ici à une explication plus détaillée de l'intérêt des bits de bourrage énoncés ci-dessus. Pour cela, il a été illustré sur la figure 10, les variations de traffic sur une station de traffic pour 16 communications vocales simultanées en prenant en compte les périodes de silence. Ces variations suivent un profil statistique : la probabilité que les 16 canaux soient actifs simultanément est très faible, tout comme la probabilité que les 16 canaux soient silencieux simultanément ; en moyenne, on a 8 canaux actifs sur 16.

Or, le compresseur étant relié à un système de transmission par satellite qui intègre une fonction DAMA, l'allocation de ressources satellite se fait avec un rythme lent, par exemple toutes les 1,6 secondes, alors qu'au cours de ces 1,6 secondes, un nombre d'interlocuteurs vont passer du silence à la parole et que sur cette même période, il n'y en a pas nécessairement autant qui passent de la parole au silence, ce qui explique la marge supplémentaire à peu près égale à 50% entre l'allocation de canaux par le système à la station de traffic considerée et les canaux effectivement utilisés sur celles-ci. Le système d'allocation de ressources ne permettant pas en général la prise en compte automatique d'une marge, le compresseur rajoute des bits de marge destinés à simuler une occupation de ressources de transmission en excès par rapport à ses besoins effectifs. Les bits supplémentaires non utilisés pour la transmission de données utiles sont utilisés à des fins de redondance d'informations les plus critiques par exemple, code d'état ou numéro de trame. Par contre, dès que le dispositif de décompression doit transmettre plus d'éléments que lors du cycle précédent, il utilise les bits de marge pour les transmettre au détriment de la transmission d'informations redondantes, le code d'état permettant de signaler quels nouveaux éléments sont actifs. Ce processus basé sur l'utilisation de bits de marge significatifs permet de lisser la charge de la liaison utilisée et donc d'adapter le dispositif de compression/décompression selon l'invention de la demande de priorité à l'inertie que présente le mécanisme d'allocation de ressources utilisé de façon classique, tout en évitant de transmettre des bits sans aucune utilité. Il est à noter que plus le cycle d'allocation de ressources est court, plus cette marge peut être réduite. Si cette marge est réduite au point qu'il ne soit pas possible de transmettre un code d'état ou un numéro de trame complet, une solution avantageuse consiste à multiplexer ces informations redondantes sur plusieurs blocs de données consécutifs, en espaçant les répétitions cycliques de ces informations par un indicateur de frontière de répétition, et en considérant que les informations ainsi multiplexées s'appliquent au bloc portant l'indicateur de frontière de répétition.

Le rôle de la fonctionnalité DAMA étant d'assurer un partage dynamique de la bande allouée en fonction des besoins courants de chaque station, en considérant N stations avec un traffic courant équilibré, dans un souci de simplification, avec 16 communications sur chaque station, on bénéficie d'un gain de multiplexage statistique considérable, si N est assez élevé (10 au minimum).

En effet, si N = 1, les ressources réservées pour les 16 communications sont strictement égales au passage des 16 communications, soit 16 x 16 kbits/s (une communication nécessitant 16 kbits/s au niveau de l'interface A-bis). Par contre, pour N élevé (supérieur à 10), le cas idéal est approché, cas qui correspond à la suffisance théorique de la réservation de 50% de la bande totale pour une station, soit 8 x 16 kbp/s par station, ou encore pour l'intégralité des 10 stations 10 x 8 x 16 kbps pour un sens donné, cette-quantité étant à doubler pour les deux sens.

Plutôt que d'établir une réservation de ressources statique pour chaque station, une allocation dynamique de ressources est réalisée.

Avec le compresseur/décompresseur selon l'invention de la demande de priorité, on se sert de la fonction de détection de l'activité des doublets pour informer le centre de gestion de ressources 10 des besoins courants des stations. En l'occurrence, il y a une allocation de ressources toutes les 1,6 secondes et l'allocation de ressources courante se base sur les statistiques de traffic du cycle de 1,6 secondes précédent.

Sur la base de cette information de besoins courants fournie par le compresseur/décompressseur selon l'invention de la demande de priorité, le centre de ressources accroit artificiellement la taille des paquets transmis par ajout de bits supplémentaires au sein de chaque paquet transmis de manière à avoir une marge de ressources suffisante.

A titre d'exemple, si le besoin courant d'une station est de transmettre 50 octets toutes les 2,5 ms, on rajoute par exemple 10 octets supplémentaires de manière à ne pas perdre de doublets dans la transmission si le nombre de doublets actifs détectés augmente de 20% avant la prochaine allocation de ressources. Si cette précaution de réservation d'une marge supplémentaire n'est pas réalisée, le modem d'émission utilisé pour la transmission sature, et rejette les paquets en excès qu'il n'arrive pas à transmettre vis à vis de la capacité de transmission qui lui a été allouée pour le cycle courant.

Les informations des bits supplémentaires formant lesdits octets supplémentaires qui complétent les paquets de transmission, peuvent être de deux types :
- soit des informations de bourrage, non pertinentes pour la transmission de données, et uniquement destinées à servir de marge de débit pour les raisons citées ci-dessus,
- soit des informations utiles, destinées à répéter les données les plus critiques pour la transmission : répétition du code d'état, numéro de trame et éventuellement répétition des bits d'entête.

On pourrait éventuellement avoir la combinaison des deux types d'informations.

On notera que la répétition du code d'état peut s'avérer fort pertinente dans la mesure où la perte ou la mauvaise réception du code d'état par l'équipement destinataire pourrait entraîner une perturbation du processus de reconstruction de la trame, ce qui se traduirait par un décalage des doublets au sein de la trame reconstruite. -

Le processus qui vient d'être décrit est identifié en tant que compression de niveau 1. La compression de niveau 2 complète la première en utilisant une signalisation identique, exploitant un code d'état analogue au code d'état décrit pour le niveau 1. Elle s'opère par identification du type de contenu véhiculé par le canal de transmission considéré. Chaque communication est multiplexée temporellement à raison d'un doublet à chaque trame, pour un canal comprimé à 16 kbps. Ce multiplexage temporel est lui-même structuré en trames, par exemple des trames de 320 bits toutes les 20 ms. Au cours de la durée d'une communication, un interlocuteur est alternativement actif ou silencieux. De manière non spécifique au dispositif considéré, lors des périodes de silence, la transmission des trames est maintenue mais un indicateur au sein de la trame permet de signaler que cette trame est non active. La compression de niveau 2 exploite cet indicateur pour suspendre la transmission des données relatives à la voix comprimée et pour ne transmettre que les éléments utiles de la trame de 320 bits. Pendant la durée de la transmission des informations utiles, le bit correspondant à la position de l'élément considéré dans la trame d'entrée du dispositif de compression est actif au sein du code d'état niveau 2, puis dès que ces informations utiles ont été transmises, le bit est remis à l'état inactif. Ce processus permet d'accroître l'efficacité du dispositif de compression de niveau 1 en l'étendant par interprétation des éléments non statiques mais comportant des données non utiles.

La figure 11 illustre de façon détaillée un dispositif de décompression ou décompresseur 302 selon un mode de réalisation de l'invention de la demande de priorité. Une entrée reliée au modem de réception 31 est reliée à une interface 45 physique assurant l'adaptation des trames (Ethernet, IP, ou ATM) au format des blocs de données compressées selon la méthode de compression exposée.

Cette interface 45 est reliée en sortie à l'entrée d'un registe tampon 46 de type FIFO stockant les blocs de données reçus.

Une première sortie du registre 46 est liée à un extracteur 47 de numéro 444 de trames alors qu'une seconde sortie est reliée à un moyen 48 d'insertion des éléments actifs de la trame courante et une troisième sortie du registre 46 est elle reliée à un détecteur 49 de code d'état.

Un compteur 50 de trames interne au décompresseur est initialisé à l'établissement de la liaison, avec un offset négatif vis à vis du numéro de la trame reçue. Cette disposition est destinée à prévenir les cas de famine dus à un retard des trames reçues vis à vis de la valeur du compteur.

Un comparateur 501 compare la valeur du numéro de trames dans l'extracteur 47 et le compteur 50. Lorsqu'il y a identité entre la valeur du compteur et le numéro de trame associé au bloc présent dans le registre tampon 46, le comparateur commande à une mémoire 51 contenant la trame précédente de la délivrer à une entrée du moyen d'insertion 48.

Le détecteur 49 de codes d'état, détecte le code d'état associé au bloc de données reçu, le fournit à l'entrée d'un registre 52 d'état dont la sortie est reliée à une autre entrée du moyen 48 d'insertion.

Enfin le registre mémoire 46 délivre le bloc de données reçues à une troisième entrée du moyen 48 d'insertion. Ainsi, sur identité des numéros de trame et de compteur de trames, le moyen d'insertion 48 reconstitue la trame courante à partir de la répétition de la trame précédente de la mémoire 51 et en remplaçant les éléments signalés comme actifs par les valeurs contenues dans le bloc de données reçues, et sur la base des informations signalant les positions des éléments actifs délivrées par le registre 52 d'état.

La trame reconstituée est alors délivrée à une interface 53 physique assurant l'adaptation des blocs de données au format des trames véhiculées sur l'interface A-bis.

Une attention particulière doit être portée sur le fait que l'esprit de l'invention de la demande de priorité peut être étendu aux couches supérieures de données, comme expliqué ci-après :
les données véhiculées au sein des trames à comprimer sont généralement elles-mêmes encapsulées au sein de trames dont le format est propriétaire ou non. La méthode de compression/décompression peut être étendue, suivant le même principe, à la compression des données situées à l'intérieur des trames. L'objectif de cette extension est d'introduire un gain de compression encore plus élevé, en éliminant toutes les données superflues.

Un exemple est l'encapsulation d'un canal voix utilisateur à 9,6 kbits/s dans une trame à 16 kbits, encapsulation effectuée en rajoutant des bits de synchronisation, de bourrage et de signalisation. La méthode de compression additionnelle est destinée à supprimer les bits de synchronisation et de bourrage, et de ne conserver que les bits de signalisation (codes d'états, ...) qui présentent un caractère dynamique, au sens donné précédemment par la détection des éléments actifs.

La synchronisation de la restitution de trames d'origine s'effectue de manière implicite, par détection de la frontière entre les blocs de données transmis.

Un intérêt particulier peut être souligné au mode de réalisation de la méthode de compression/décompression selon l'invention de la demande de priorité telle que décrite dans la suite, consistant en un passage automatique en mode non comprimé :
le gain en bande passante est évalué en permanence. Dès que le flux moyen de sortie du compresseur de doublets excède le flux moyen d'entrée en termes de débit, le dispositif de compression est court-circuité, de manière synchrone sur une frontière de trame, et un indicateur est transmis au décompresseur afin de désactiver le mécanisme de décompression côté décompresseur. A l'inverse, dès que le flux moyen comprimé passe en dessous d'un certain seuil vis à vis du flux incident, le dispositif de compression/décompression est réactivé.

Le seuil est destiné à éviter le basculement intempestif du mode comprimé au mode non comprimé, notamment lorsque la charge des trames à transmettre est proche de la saturation.

En vue d'éviter toute perturbation de la liaison par satellite qui pourrait se traduire par une perte d'informations, une altération des informations transmises, voire un ajout d'informations perturbatrices et donc une perturbation sur la restitution des trames, les dispositions suivantes sont considérées, applicables de manière singulière ou combinée :
- passage automatique en mode non comprimé dès que la qualité de la liaison devient critique (monitoring de l'E_{b}/N₀ ou du BER), et/ou exploitant la détection d'erreur basée par exemple sur le CRC associé à chaque trame Ethernet,
- ajout de codes de redondance cyclique aux informations les plus critiques, notamment le code d'état, destiné à sécuriser la récupération correcte de cette information,
- répétition du code d'état,
- transmission systématique du code d'état dès que la qualité de la liaison passe en dessous d'un certain seuil ou dès qu'une erreur est détectée (erreur de séquence du numéro de trame ou erreur de CRC),
- envoi du code d'état avec une cadence plus élevée lorsque la qualité de la liaison se dégrade,
- contrôle du numéro de trame associé au bloc de données reçu, afin de détecter des ruptures de séquence liées notamment à une perte de trame, et analyse du numéro de trame suivant afin de corriger une erreur passagère sur un numéro de trame.

Il existe dans l'art antérieur un tramage nommé IBS ("Intelsat Business Services") utilisé pour la transmission par satellite du type de la structure de trame décrite à la figure 6. La transmission en tramage IBS est très répandue, car elle offre la possibilité de transmettre N x 64 kbps, N étant établi en fonction du besoin réel de l'opérateur de réseaux. Cependant, les modems IBS n'intégrent pas de fonctionnalité permettant de faire varier dynamiquement le débit N x 64 kbps en fonction du contenu à transmettre.

Selon un mode de réalisation, le dispositif de compression 30 départage le traffic sur deux ou plus de ses sorties, chaque sortie offrant un débit fixe, activé en fonction de la charge résultant après compression par le compresseur 301 suivant la méthode décrite ci-dessus. Dès que le débit comprimé dépasse le débit réservé sur la première voie, par exemple 5 x 64 kbits/s, on décharge une partie du traffic sur une seconde voie, par exemple à 2 x 64 kbits/s, et dès que cette seconde voie est à son tour saturée, on bascule la seconde voie sur une troisième voie à, par exemple, 4 x 64 kbps, et ainsi de suite en basculant le surcroît de traffic entre les voies 2 et 3 sans interruption de la transmisssion mais en déchargeant le traffic de la voie permanente vers la voie additionnelle ainsi constituée.

Côté réception, on reconstitue les trames d'origine en concaténant les blocs de données reçus via la voie principale et via la voie additionnelle.

La figure 12 illustre une variante 303 du dispositif de décompression 302 de la figure 11 qui peut être appliquée également et avantageusement dans un réseau IP quelconque, public ou privé. Les fonctions avantageuses dans ce cas sont : la compression/décompression de données aux niveaux 1 et 2, l'ajout de numéro de trame, la décompression avec resynchronisation des trames en sortie et traitement spécifique en cas de non réception de la trame comprimée à l'instant où elle doit être restituée.

Les blocs de données 44 entrent dans le décompresseur 303 par une entrée 3030. Un extracteur 304 de numéros de trames extrait les numéros de chaque trame permettant de les identifier. D'autre part les blocs 44 sont fournis à une mémoire (305) de mémorisation des blocs de données. Sur la figure 12, sont illustrés 6 blocs de données caractérisés par leurs numéros 444 de trames représentés chacun par un bloc plein. La première case de chaque bloc représente le code d'état 442 du bloc et les cases suivantes correspondent aux données comprimées 441.

Une ligne discontinue référencée A sur la figure 12 entoure notamment la partie commune avec la figure 11 pour la restitution des trames d'origine. Celle-ci ayant été déjà décrite et expliquée, on n'y reviendra pas ici.

En outre, le dispositif 303 comprend un circuit 307 d'initialisation de compteur recevant le numéro de la trame courante ainsi ainsi que le nombre de blocs de données mémorisés dans la mémoire 305.

Lors de l'initialisation du dispositif de décompression, le circuit 307 initialise le compteur 50 en le synchronisant avec le premier numéro de trame reçu par le décompresseur.

En outre, sur détection répétée d'écart entre les numéros de trames reçus et la sortie courante du compteur par la suite, la synchronisation par le circuit d'initialisation est réitérée.

Le fonctionnement est le suivant : les trames décomprimées sont destinées à être conservées dans la mémoire 305 du dispositif de décompression tant que le numéro de trame qui leur est respectivement associé n'est pas identique au numéro de trame délivré par le compteur de trames local compte tenu d'un offset négatif, pour permettre une certaine souplesse dans la restitution des trames et pour compenser les fluctuations temporelles induites par le système de transmission, ce qui arrive souvent lors d'une transmission par satellite ou dans les réseaux terrestres notamment IP, alors que les trames sont censées être restituées à un rythme constant et immuable. Dès que l'identité se produit au niveau du comparateur 501, la trame pour laquelle l'identité est apparue est alors appliquée à la sortie du dispositif du décompression.

Si aucune trame ne répond au numéro de la trame à restituer en sortie du dispositif de décompression, la trame précédente est répétée et/ou un code d'erreur est généré par un générateur 307 de signalisation d'absence de trames à destination d'un centre non représenté de gestion du système de télécommunications.

Si l'erreur de non-identité entre le numéro de trame courante et le numéro de trame délivré par le compteur de trames local du dispositif de décompression se répète sur plusieurs trames consécutives, le compteur de trames local est resynchronisé sur les identifiants de trames reçus.

L'offset négatif appliqué sur la sortie du compteur de trames est destiné à établir une marge permettant de couvrir la plage de fluctuations temporelles induites par le système de transmission par satellite.

On voit sur le schéma de la figure 12 qu'au lieu d'utiliser une FIFO telle que celle utilisée sur le mode de réalisation de la figure 11, on utilise une mémoire buffer, permettant de réordonner les blocs de données reçus, sur la base du numéro de bloc associé à chaque bloc de donnée, numéro représenté dans les cases pleines, le circuit d'initialisation permettant d'initialiser le compteur au démarrage, ou à chaque fois qu'une rupture de séquence répétée se produit.

L'initialisation du compteur local est opérée en fonction des statistiques de variation du nombre de blocs présents dans le buffer, en régulant la valeur minimale pour qu'elle soit toujours supérieure à 1 en tenant compte d'une marge supplémentaire, et inférieure à la capacité du buffer exprimée en nombre de blocs maximum.

Si le nombre de blocs stockés atteint la taille du buffer exprimée en nombre de blocs max, une alarme est générée par le générateur 306, signifiant qu'un comportement anormal du réseau est constaté (fluctuations temporelles trop importantes).

Ce dispositif de décompression selon cette variante présente donc l'avantage de pouvoir d'une part recevoir des blocs de données en séquence désordonnée grâce à la mémoire 305, et d'autre part pouvoir supporter des fluctuations de délai de transmission grâce à l'offset introduit.

Ce qui est décrit dans la suite est directement lié à l'esprit de l'invention de la présente demande.

Le principe de la présente invention consiste en l'analyse du contenu de chaque canal (porté par deux bits dans les précédents modes, mais qui peuvent l'être de façon non limitative par un, deux, quatre ou huit bits selon le mode de transmission) ; si le canal analysé est constitué par la répétition consécutive d'un motif de référence ou fenêtre de référence ("reference pattern" en anglais) tout au long d'une fenêtre d'analyse, il est comprimé ; par exemple, pour un motif de référence sur 4 bits, correspondant à l'état du bit considéré au cours des 4 dernières trames précédant la fenêtre d'analyse courante :
- si la trame de référence = 1011 par exemple,
- le canal est comprimé si au cours de la fenêtre d'analyse, le contenu successif du canal considéré (codé sur un bit dans le cas présent) est égal à :
   abcdabcdabcdabcd
   si au moins 1 bit diffère de la répétition cyclique du motif de référence, le canal est considéré comme actif, c'est à dire non statique, et son contenu est transmis intégralement pour la fenêtre d'analyse courante ; pour un canal comprimé, aucune donnée n'est transmise hormis un descripteur de canal actif ou ACD (pour "Active Channel Descriptor" en anglais), qui permet d'identifier la position des canaux actifs au sein de la trame à reconstituer. Le descripteur ACD est également dénommé code d'état (référencé 442 dans les précédents modes de réalisation de la demande de priorité).

En conséquence, au lieu de se baser sur l'état d'un seul bit par canal pour détecter le passage à l'état statique, on exploite l'état du bit au cours des N dernières trames précédant la fenêtre d'analyse courante.

Un mode de réalisation du procédé de compression est illustré à la figure 13, avec N = 4.

On remarque que les deux premiers canaux de la fenêtre d'analyse 70 se répète avec une période de 4 trames consécutives, à l'identique du motif de référence 71 constituée par l'état du canal lors des 4 dernières trames précédant la fenêtre 70 d'analyse courante. Une décision de copression du motif répété est alors prise.

Le dispositif 301' de compression selon l'invention, illustré sur la figure 14, est analogue à celui 301 de la figure 7, à l'exception d'une mémoire 34' de mémorisation de L*N trames courantes formant la fenêtre d'analyse 70 et d'une mémoire 35' de mémorisation des N trames précédant la fenêtre d'analyse formant le motif de référence.

De même, le dispositif 302' de la figure 15 est analogue à celui de la figure 11, à ceci près du remplacement de la mémoire 51 par une mémoire 51' de mémorisation du motif de référence (les 4 dernières trames de données précédant la trame compressée courante).

Le procédé est alors identique au procédé de la demande de priorité exposé ci-dessus :
- du côté du compresseur, suppression des canaux statiques de la fenêtre courante, transmission à chaque fenêtre d'analyse du code d'état ACD permettant de spécifier la position de chaque canal actif au sein de la trame d'entrée, suivi du contenu concaténé de chaque canal actif ;
- du côté du décompresseur, extraction//détection du code d'état ACD par le détecteur 49, puis restitution de la structure de la trame non comprimée par insertion du contenu de chaque canal actif à la position spécifiée par le code d'état ACD, avec répétition pour chaque canal statique du contenu de son bit statique correspondant tiré du motif de référence (processus nouveau, au lieu du maintien du bit de référence du canal statique considéré), grâce à la comparaison/mémorisation du contenu des N dernières trames précédant le passage du canal à l'état statique. On notera que le bloc 40 reçoit également le motif de de référence. Ce bloc 40 a pour fonction de transmettre périodiquement entre deux blocs de données 44' le motif de référence.

On aborde désormais un aspect particulièrement avantageux de l'invention qui répond au besoin de sécurisation du procédé de récupération des canaux concaténés, transmis sous forme sérialisée.

En effet, un problème peut survenir suite à un défaut de sérialisation ou de séquencement se traduisant par un décalage des données transmises, à droite si des canaux déclarés non actifs ont été insérés par erreur, à gauche si des canaux déclarés actifs n'ont pas été insérés.

La figure 16 représente une structure 44' de trame compressée selon la méthode de compression de l'invention à partir d'un enssemble 500 de NT trames E1 et qui refoumit en fin de chaîne, côté décompresseur, les NT trames E1 :

Cette structure commence classiquement par au moins un bit 446 de synchronisation et se termine par des bits 447 de bourrage.

Lorsque le dispositif fonctionne correctement, le nombre de bits du champ 441' dit CAC (pour "concatenated active channels" en anglais) est égal au nombre de bits à 1 dans le code d'état, caractérisant la position des canaux actifs au sein de la trame d'entrée, multiplié par le nombre NT de trames entrant dans la fenêtre d'analyse.

Par exemple, si ACD =0 1 0 1 1 1 1 0 1 en valeur binaire, où 5 bits sont à 1, signifiant que 5 canaux sont actifs pour la fenêtre d'analyse courante, et si NT = 16, signifiant que la fenêtre d'analyse porte sur 16 trames d'entrée au niveau du compresseur, alors le nombre de bits du champ CAC est égal à 5 x NT = 80 bits ; le dispositif compare les 8 bits de la trame reçue, situés 80 bits après la fin de l'ACD CRC 445; si aucune erreur de formatage ou de transmission ne s'est produite, le champ ainsi obtenu est égal à la valeur établie pour un délimiteur 448 agencé juste après le CAC.

Cependant, le délimiteur qui fixe la frontière entre le champ « concatenated active channels » et les bits de bourrage peut être décalé vis à vis de la position qu'il est censé occuper.

Plusieurs erreurs sont possibles, induites par des erreurs binaires induites au niveau de l'ACD, de l'ACD CRC, ou du délimiteur.

Pour détecter et traiter un tel cas, qui résulterait en une erreur de décompression, différentes actions sont réalisées ; elles sont toutes basées sur l'analyse du contenu du délimiteur de la trame compressée reçue (tout de suite après le champ « concatenated active channels » tel qu'exploité à partir de l'ACD reçu), et sur l'exploitation du champ de l'ACD CRC (Code de Redondance Cyclique), qui permet de détecter une erreur dans la transmission de l'ACD (ou dans le CRC associé à l'ACD).

Le délimiteur présente une valeur fixe, établie du côté du compresseur, et égale à 1111 0000 par exemple.

Tous ces cas sont traités succesivement par calcul du CRC associé à l'ACD, comparaison du CRC calculé avec l'ACD CRC reçu, et comparaison du champ reçu, consécutif au champ « concatenated active channels » avec la valeur fixée pour le délimiteur, suivant le processus suivant :
- cas normal : si l'ACD CRC et le délimiteur sont corrects, alors la décompression est effectuée en utilisant l'ACD reçu ;
- si l'ACD CRC est incorrect mais si le délimiteur est correct, alors « erreur ACD CRC », la décompression est effectuée en utilisant l'ACD reçu ;
- si l'ACD CRC est correct mais le délimiteur est incorrect, alors « erreur délimiteur », la décompression est effectuée en utilisant l'ACD reçu ;
- si l'ACD CRC et le délimiteur sont tous deux incorrects, un test est réalisé pour détecter si le champ du délimiteur est correct en se basant sur l'ACD de la trame compressée précédente (les changements d'activité de canaux sont généralement nettement moins fréquents que la période des trames compressées) ; si le test est positif, alors « erreur ACD », la décompression est effectuée en utilisant l'ACD de la trame compressée précédente ; si le test est négatif, alors « erreur décompression », il y a suspension de la décompression et sortie de trames vides.

Bien entendu, la présente invention n'est pas limitée aux modes de réalisation décrits et d'autres modes de réalisation de l'invention peuvent être facilement imaginés par l'homme du métier.

## Revendications

1. Dispositif de compression de données (301'), destiné à compresser un ensemble (500) de trames (60) courantes de données d'un flux de données, ces trames étant de structure définie selon une pluralité d'intervalles temporels, un premier groupe d'intervalles temporels étant tels que chacun d'eux soit décomposé selon une pluralité de bits d'informations portant respectivement un canal de communication,
caractérisé ce que ledit dispositif de compression comprend :
- des moyens (40) de transmission d'un motif de référence comprenant les N trames précédant l'ensemble (500) de trames courantes, avec N entier supérieur à 1,
- des moyens (36, 361, 362, 363) d'analyse de l'état actif ou statique d'au moins un canal compris dans une fenêtre d'analyse (70) des trames (60) courantes, l'état actif, respectivement statique, de ce canal lui étant attribué lorsque la comparaison du contenu de ce canal dans les N bits comparés entre les N trames d'un motif (71) de référence avec les N bits correspondants des N trames de la fenêtre d'analyse montre une variation de contenu pour au moins l'un des bits, respectivement une stabilité de contenu pour l'ensemble des N bits,
- des moyens (37,CAC) d'extraction du contenu des canaux actifs de la fenêtre d'analyse en fonction des états actifs des bits fournis par lesdits moyens d'analyse,
- des moyens (41,ACD) de localisation aptes à fournir des indications de localisation desdits bits actifs et statiques dans la trame courante en fonction des états actifs et statiques des bits fournis par lesdits moyens d'analyse,
- des moyens (40) de regroupement d'au moins un identifiant du bloc courant, du contenu des bits actifs et de leur localisation respective au sein d'un bloc (44) de données à émettre.

2. Dispositif selon la revendication 1, **caractérisé en ce qu'**il comprend des premiers moyens (34') de mémorisation des N trames précédant la fenêtre d'analyse courante formant le motif de référence.

3. Dispositif selon la revendication 1 ou 2, **caractérisé en ce qu'**il comprend des seconds moyens (35') de mémorisation des trames (60) courantes formant la fenêtre d'analyse.

4. Dispositif selon l'une des revendications 1 à 3, **caractérisé en ce que** la fenêtre d'analyse a une longueur de L*N trames, avec L ≥ 1, de telle sorte que les bits sont regroupés par blocs (700) de N bits formant ainsi L blocs de N bits et **en ce que** pour chaque bit correspondant spatialement au sein des L blocs se succédant, la répétition des mêmes contenus entraîne une décision d'inactivité du bloc de N bits.

5. Dispositif selon l'une des revendications 1 à 4, **caractérisé en ce qu'**il comprend des moyens (39) d'identification de trames pour fournir un identifiant (444) propre à chaque trame compressée.

6. Dispositif selon l'une des revendications précédentes, **caractérisé en ce que** lesdits moyens de localisation comportent des moyens (41) de génération d'un code d'états significatif des états respectifs desdits bits des trames d'entrée.

7. Dispositif selon l'une des revendications 1 à 6, **caractérisé en ce que** lesdits moyens (36, 361, 362, 363) d'analyse comprennent des moyens de comparaison (361) du contenu de la fenêtre d'analyse avec celui du motif de référence, des moyens (362) de détection de variation d'états en fonction de ladite comparaison et des moyens (363) de détermination de l'état actif ou statique de chacun des bits, respectivement des blocs de N bits.

8. Dispositif selon la revendication 7 combinée à la revendication 4, **caractérisé en ce que** les moyens (363) de détermination comprennent des troisièmes moyens de mémorisation (3631) pour mémoriser un nombre L correspondant au nombre de blocs de bits de largeur N à considérer avant qu'un bloc soit identifié comme passant de l'état actif à celui de statique.

9. Dispositif selon l'une des revendications 1 à 8, **caractérisé en ce qu'**il comprend des quatrième moyens de mémorisation (42) pour mémoriser plusieurs blocs (44) de données avant de procéder à l'émission.

10. Dispositif selon l'une des revendications 1 à 9, **caractérisé en ce que** lesdits moyens de regroupement comprennent un gestionnaire (401) de données de bourrage, apte à gérer des données à transmettre de façon complémentaire dans le bloc (44) par rapport aux données comprises dans ledit premier groupe d'intervalles temporels.

11. Dispositif selon l'une des revendications 1 à 10, **caractérisé en ce qu'**il comporte une pluralité de sorties pour émission des blocs de données (44), chaque sortie offrant un débit prédéterminé, le dispositif étant préprogrammé de manière à diriger les blocs de données vers les sorties de manière sélective selon leur niveau respectif de saturation de débit.

12. Dispositif selon la revendication 11, **caractérisé en ce qu'**il comporte une première sortie à débit fixe et une sortie à débit variable apte à recevoir le bloc de données.

13. Dispositif selon la revendication 11, **caractérisé en ce qu'**il comporte au moins trois sorties, une première à débit fixe, une seconde à débit fixe et qui est activée dès que le débit excède la capacité de celui offert sur la première sortie, et une troisième sortie qui est activée à la place de la seconde dès que la capacité disponible sur les première et seconde sorties apparaît à son tour insuffisante, l'activation alternative des première et seconde sorties permettant d'augmenter, respectivement de décroître, par pas prédéterminés la capacité allouée à la liaison à laquelle le dispositif de compression est relié en fonction des besoins courants.

14. Dispositif de décompression de données, destiné à décompresser un bloc (44') de données compressées, ledit bloc de données comprenant un groupe (441') de données compressées à partir d'un ensemble (500) de trames (60) courantes de données de structure définie selon une pluralité d'intervalles temporels, un premier groupe d'intervalles temporels étant tels que chacun d'eux soit décomposé selon une pluralité de bits portant respectivement un canal de communication, **caractérisé en ce qu'**il comprend des moyens (51') de mémorisation d'un motif de référence reçu comportant les N trames précédant le bloc courant de données comprimées, N étant supérieur à 1,
et étant entendu, l'état actif, respectivement statique, de ce canal lui étant attribué lorsque la comparaison du contenu de ce canal dans les N bits comparés entre les N trames du motif (71) de référence avec les N bits correspondants des N trames de la fenêtre d'analyse montre une variation de contenu pour au moins l'un des bits, respectivement une stabilité de contenu pour l'ensemble des N bits, le dispositif de décompression comprend :
- des moyens (49) de détection d'indications de localisation des bits actifs du groupe (441') de données dans un groupe de données (441') du bloc (44'),
- des cinquième moyens (52) de mémorisation desdites indications de localisation des éléments actifs,
- des moyens (48) d'insertion des bits statiques et actifs détectés en fonction de leur localisation respective indiquée, de manière à reformer les trames courantes.

15. Procédé de gestion de ressources de bande passante dans un système de télécommunications entre stations de traffic transmettant des blocs (44') de données par liaison satellite, un tel bloc de données comprenant un groupe (441') de données comprimées à partir d'un ensemble de trames (60) de données de structure définie selon une pluralité d'intervalles temporels, un premier groupe d'intervalles temporels étant tels que chacun d'eux soit décomposé selon une pluralité de bits d'informations portant respectivement un canal de communication, et ledit système comprenant un centre (10) de gestion desdites ressources,
**caractérisé en ce que** le procédé comprend au sein d'au moins une station:
- une étape d'analyse de l'état actif ou statique de N bits compris dans une fenêtre d'analyse (70) des trames (60) courantes, avec N supérieur à 1, l'état actif, respectivement statique, de ce canal lui étant attribué lorsque la comparaison du contenu de ce canal dans les N bits comparés entre les N trames d'un motif (71) de référence avec les N bits correspondants des N trames de la fenêtre d'analyse montre une variation de contenu pour au moins l'un des bits, respectivement une stabilité de contenu pour l'ensemble des N bits,
et le procédé comprend au niveau du centre de gestion :
- une étape de réception d'une information représentative des canaux actifs analysés d'au moins un bloc (44') de données,
- une étape d'allocation de ressources pour la station, qui est en fonction de ladite information.

16. Procédé de gestion de ressources selon la revendication 15, **caractérisé en ce que** l'information représentative des bits actifs transmise provient d'une requête de ressources de ladite au moins station à destination du centre de gestion, destinée à faire varier les ressources de transmission de la station chaque fois qu'un bit passe de l'état actif à statique, ou réciproquement.

17. Procédé de gestion de ressources selon la revendication 15, **caractérisé en ce que** l'étape de réception de l'information représentative des bits actifs analysés fait suite à une étape de détection des bits actifs sur la liaison de transmission de la station dans le système.

18. Procédé de gestion de ressources selon l'une des revendications 15 à 17, **caractérisé en ce que** l'étape d'allocation de ressources consiste à déterminer une taille de blocs de données et/ou une période de transmission conférées à la station qui est en fonction de ladite information, pour permettre une transmission d'au moins les bits actifs.

19. Procédé de gestion de ressources selon l'une des revendications 15 à 18, **caractérisé en ce que** l'étape d'allocation de ressources pour la station s'effectue en fonction de ladite information à partir de laquelle une marge supplémentaire est pris en compte de façon opportune entre le nombre de bits actifs et le dimensionnement des ressources allouées à chaque liaison des stations du système.

20. Procédé de gestion de ressources selon l'une des revendications 15 à 19, **caractérisé en ce que** ledit système comprend un gestionnaire (401) de données complémentaires apte à ajouter des données complémentaires sur la liaison établie pour ladite au moins station lui assurant ainsi une marge de ressources.

## Claims

1. Data compression device (301') for compressing a set (500) of current data frames (60) of a data stream, these frames having a structure defined by a plurality of time slots, a first group of time slots being such that each is broken down into a plurality of information bits carrying respective communication channels,
**characterized in that** said compression device comprises:
- means (40) for transmitting a reference pattern comprising the N frames preceding the set (500) of current frames, where N is an integer greater than 1,
- means (36, 361, 362, 363) for analyzing the active or static state of at least one channel contained in an analysis window (70) of the current frames (60), the active, respectively static, state of this channel being assigned to it if the comparison of the content of this channel in the N bits compared between the N frames of a reference pattern (71) with the corresponding N bits of the N frames of the analysis window indicates a variation of content for at least one of the bits, respectively a stability of the content for all of the N bits,
- means (37, CAC) for extracting the content of the active channels from the analysis window based on the active states of the bits supplied by said analysis means,
- location means (41, ACD) for supplying indications of the locations of said active and static bits in the current frame based on the active and static states of the bits supplied by said analysis means,
- means (40) for grouping at least one identifier of the current block, the content of the active bits and their respective locations within a data block (44) to be transmitted.

2. Device according to claim 1, **characterized in that** it comprises first memory means (34') for storing the N frames preceding the current analysis window forming the reference pattern.

3. Device according to claim 1 or 2, **characterized in that** it comprises second memory means (35') for storing current frames (60) forming the analysis window.

4. Device according to one of claims 1 to 3, **characterized in that** the analysis window has a length of L*N frames, where L≥1, so that the bits are grouped into blocks (700) of N bits thereby forming L blocks of N bits, and **in that** for each spatially corresponding bit within the L block in succession, the repetition of the same content leads to an inactivity decision in respect of the block of N bits.

5. Device according to one of claims 1 to 4, **characterized in that** it comprises frame identification means (39) for supplying an identifier (444) specific to each compressed frame.

6. Device according to one of the previous claims, **characterized in that** said location means comprise means (41) for generating a state code signifying respective states of said bits of the input frames.

7. Device according to one of claims 1 to 6, **characterized in that** said analysis means (36, 361, 362, 363) comprise means (361) for comparing the content of the analysis window with that of the reference pattern, means (362) for detecting state variations based on said comparison, and means (363) for determining the active or static state of each bit, respectively the N bit blocks.

8. Device according to claim 7 combined with claim 4, **characterized in that** the determination means (363) comprise third means (3631) for storing a number L corresponding to the number of N-width bit blocks to be considered before a block is identified as changing from the active state to the static state.

9. Device according to one of claims 1 to 8, **characterized in that** it comprises fourth storage means (42) for storing a plurality of data blocks (44) before sending.

10. Device according to one of claims 1 to 9, **characterized in that** said grouping means comprise a padding data manager (401) for managing data to be transmitted in complementary fashion in the block (44) relative to the data contained in said first group of time slots.

11. Device according to one of claims 1 to 10, **characterized in that** it comprises a plurality of outputs for transmitting data blocks (44), each output offering a predetermined bit rate, the device being pre-programmed to direct data blocks selectively to the outputs according to their respective bit rate saturation level.

12. Device according to claim 11, **characterized in that** it comprises a fixed bit rate first output and a variable bit rate output for receiving the data block.

13. Device according to claim 11, **characterized in that** it comprises at least three outputs, a fixed bit rate first output, a fixed bit rate second output that is activated as soon as the bit rate exceeds the capacity of that offered at the first output, and a third output that is activated in place of the second output as soon as the capacity available at the first and second outputs appears insufficient in turn, alternate activation of the first and second outputs increasing, respectively decreasing, in predetermined steps the capacity assigned to the connection to which the compression device is connected based on current requirements.

14. Data decompression device for decompressing a compressed data block (44'), said data block comprising a data group (441') compressed from a set (500) of current data frames (60) having a structure defined by a plurality of time slots, a first group of time slots being such that each is decomposed into a plurality of bits carrying respective communication channels, **characterized in that** it comprises fourth storage means (51') for storing a received reference pattern comprising the N frames preceding the current compressed data block, where N is greater than 1,
and it being understood that the active, respectively static, state of this channel is assigned to it if the comparison of the content of this channel in the N bits compared between the N frames of the reference pattern (71) with the corresponding N bits of the N frames of the analysis window indicates a variation of content for at least one of the bits, respectively a stability of content for all of the N bits, the decompressor comprises:
- means (49) for detecting indications of the locations of the active bits of the data group (441') in a data group (441') of the block (44),
- fifth storage means (52) for storing said active element location indications,
- means (48) for inserting the detected static and active bits based on their respective indicated location, so as to form the current frames.

15. Method of managing bandwidth resources in a telecommunication system transmitting data blocks (44') between traffic stations via satellite, such a data block comprising a data group (441') compressed from a set of data frames (60) having a structure defined by a plurality of time slots, a first group of time slots being such that each is broken down into a plurality of information bits carrying respective communication channels, and said system comprising a management center (10) for said resources, **characterized in that** the method comprises, within at least one station
- a step for analyzing the active or static state of N bits contained in an analysis window (70) of the current frames (60), where N is greater than 1, the active, respectively static, state of this channel being assigned to it if the comparison of the content of this channel in the N bits compared between the N frames of a reference pattern (71) with the corresponding N bits of the N frames of the analysis window indicates a variation of content for at least one of the bits, respectively a stability of content for all the N bits,
and the method comprises, at the management center:
- a step of receiving information representative of the analyzed active channels of at least one data block (44'),
- a step of allocating resources for the station based on said information.

16. Resource management method according to claim 15, **characterized in that** the information transmitted representative of the active bits originates from a request for resources sent from said at least one station to the management center, whereby the transmission resources of the station are varied each time that a bit goes from the active state to the static state, or vice versa.

17. Resource management method according to claim 15, **characterized in that** the step of receiving information representative of the analyzed active bits follows a step of detecting active bits on the transmission link of the station in the system.

18. Resource management method according to one of claims 15 to 17, **characterized in that** the step of assigning resources consists in determining a data block size and/or a transmission period conferred on the station that depends on said information, to allow transmission of at least the active bits.

19. Resource management method according to one of claims 15 to 18, **characterized in that** the step of assigning resources for the station is carried out based on said information, on the basis of which a supplementary margin between the number of active bits and the magnitude of the resources assigned to each connection of the stations of the system is opportunely taken into account.

20. Resource management method according to one of claims 15 to 19, **characterized in that** said system comprises a complementary data manager (401) adapted to add complementary data to the connection set up for said at least one station, thereby providing it with a resource margin.

## Patentansprüche

1. Datenkompressionsvorrichtung (301') zum Komprimieren eines Satzes (500) von aktuellen Datenrahmen (60) eines Datenstroms, wobei diese Rahmen eine gemäß einer Mehrzahl von Zeitabständen definierte Struktur aufweisen, wobei eine erste Gruppe von Zeitabständen derart gewählt wird, dass ein jeder Zeitabstand gemäß einer Mehrzahl von Informationsbits, welche jeweils einen Kommunikationskanal tragen, zerlegt wird, **dadurch gekennzeichnet, dass** die besagte Kompressionsvorrichtung umfasst:
- Mittel (40) zum Übertragen eines Referenzmusters, welches die N Rahmen, die dem Satz (500) von aktuellen Rahmen vorangehen, enthält, wobei N eine ganze Zahl von höher als 1 ist,
- Mittel (36, 361, 362, 363) zum Analysieren des aktiven oder statischen Zustands mindestens eines in einem Analysefenster (70) der aktuellen Rahmen (60) enthaltenen Kanals, wobei diesem Kanal der aktive bzw. der statische Zustand zugewiesen wird, wenn der Vergleich des Inhalts dieses Kanals in den N Bits, verglichen zwischen den N Rahmen eines Referenzmusters (71), mit den entsprechenden N Bits der N Rahmen des Analysefensters eine Abweichung des Inhalts für mindestens eines der Bits beziehungsweise eine Stabilität des Inhalts für die Gesamtheit der N Bits ergibt,
- Mittel (37, CAC) zum Extrahieren des Inhalts aus den aktiven Kanälen des Analysefensters in Abhängigkeit von den aktiven Zuständen der von den besagten Analysemitteln gelieferten Bits,
- Ortungsmittel (41, ACD), ausgelegt für das Bereitstellen der Ortungsangaben der besagten aktiven und statischen Bits in dem aktuellen Rahmen in Abhängigkeit von dem aktiven oder statischen Zustand der von den besagten Analysemittel gelieferten Bits,
- Mittel (40) zum Zusammenfügen mindestens einer Kennung des aktuellen Blocks, des Inhalts der aktiven Bits und deren jeweiliger Ortung innerhalb eines auszusendenden Datenblocks (44).

2. Vorrichtung nach Anspruch 1, **dadurch gekennzeichnet, dass** sie erste Mittel (34') zum Speichern der dem aktuellen Analysefenster vorangehenden N Rahmen, welche das Referenzmuster bilden, umfasst.

3. Vorrichtung nach Anspruch 1 oder 2, **dadurch gekennzeichnet, dass** es zweite Mittel (35') zum Speichern der aktuellen Rahmen (60), welche das Analysefenster bilden, umfasst.

4. Vorrichtung nach einem der Ansprüche 1 bis 3, **dadurch gekennzeichnet, dass** das Analysefenster eine Länge von L*N Rahmen aufweist, mit L ≥ 1, so dass die Bits in Blöcke (700) von N Bits zusammengefügt werden und dementsprechend L Blöcke mit N Bits bilden, und dass für jedes räumlich entsprechendes Bit innerhalb der aufeinanderfolgenden L Blöcke die Wiederholung derselben Inhalte eine Entscheidung der Inaktivität des Blocks von N Bits zur Folge hat.

5. Vorrichtung nach einem der Ansprüche 1 bis 4, **dadurch gekennzeichnet, dass** es Mittel (39) zum Identifizieren von Rahmen umfasst, um eine einem jeden komprimierten Rahmen eigene Kennung (444) bereitzustellen.

6. Vorrichtung nach einem der vorstehenden Ansprüche, **dadurch gekennzeichnet, dass** die besagten Ortungsmittel Mittel (41) zum Erzeugen eines Zustandscodes, welcher für die jeweiligen Zustände der besagten Bits der Eingangsrahmen bezeichnend ist, umfassen.

7. Vorrichtung nach einem der Ansprüche 1 bis 6, **dadurch gekennzeichnet, dass** die besagten Analysemittel (36, 361, 362, 363) Mittel (361) zum Vergleichen des Inhalts des Analysemittels mit dem Inhalt des Referenzmusters, Mittel (362) zum Erkennen der Zustandsabweichungen in Abhängigkeit von dem besagten Vergleich und Mittel (363) zum Bestimmen des aktiven oder statischen Zustands eines jeden Bits beziehungsweise der Blöcke von N Bits umfassen.

8. Vorrichtung nach Anspruch 7 in Verbindung mit Anspruch 4, **dadurch gekennzeichnet, dass** die Mittel (363) zum Bestimmen dritte Speichermittel (3631) zum Speichern einer Anzahl L, welche der Anzahl der Bitblöcke mit einer Breite N entspricht, die zu berücksichtigen sind, bevor ein Block als von dem aktiven Zustand in den statischen Zustand übergehend identifiziert wird, umfassen.

9. Vorrichtung nach einem der Ansprüche 1 bis 8, **dadurch gekennzeichnet, dass** sie vierte Speichermittel (42) zum Speichern mehrerer Datenblöcke (44), bevor eine erneute Übertragung vorgenommen wird, umfasst.

10. Vorrichtung nach einem der Ansprüche 1 bis 9, **dadurch gekennzeichnet, dass** die besagten Mittel zum Zusammenfügen eine Fülldatenverwaltungseinrichtung (401) umfassen, welche für die Verwaltung der zusätzlich zu den in der ersten Gruppe von Zeitabständen enthaltenen Daten in dem Block (44) zu übertragenden Daten ausgelegt ist.

11. Vorrichtung nach einem der Ansprüche 1 bis 10, **dadurch gekennzeichnet, dass** sie eine Mehrzahl von Ausgängen für das Senden der Datenblöcke (44) umfasst, wobei jeder Ausgang eine vorgegebene Datenrate bietet, wobei die Vorrichtung derart vorprogrammiert ist, dass die Datenblöcke entsprechend dem jeweiligen Sättigungsgrad der Datenrate selektiv an die Ausgänge geleitet werden.

12. Vorrichtung nach Anspruch 11, **dadurch gekennzeichnet, dass** sie einen ersten Ausgang mit einer fest vorgegebenen Datenrate und einen Ausgang mit variabler Datenrate für den Empfang des Datenblocks umfasst.

13. Vorrichtung nach Anspruch 11, **dadurch gekennzeichnet, dass** sie mindestens drei Ausgänge, einen ersten mit einer fest vorgegebenen Datenrate, einen zweiten mit einer fest vorgegebenen Datenrate, welcher aktiviert wird, sobald die Datenrate die auf dem ersten Ausgang gebotene Kapazität überschreitet, und einen dritten Ausgang, welcher anstelle des zweiten Ausgangs aktiviert wird, sobald die auf dem ersten und auf dem zweiten Ausgang verfügbare Kapazität wiederum nicht ausreichend scheint, umfasst, wobei es die alternative Aktivierung des ersten und des zweiten Ausgangs ermöglicht, die einer Verbindung, an welche Kompressionsvorrichtung angebunden ist, in Abhängigkeit vom aktuellen Bedarf zugeteilte Kapazität in vorgegebenen Schritten zu erhöhen beziehungsweise zu verringern.

14. Datendekompressionsvorrichtung zum Dekomprimieren eines komprimierten Datenblocks (44'), wobei der besagte Datenblock eine Gruppe (441') von ausgehend von einem Satz (500) von aktuellen Datenrahmen (60), die eine gemäß einer Mehrzahl von Zeitabständen definierte Struktur aufweisen, komprimierten Daten enthält, wobei eine erste Gruppe von Zeitabständen derart gewählt wird, dass ein jeder Zeitabstand gemäß einer Mehrzahl von Bits, welche jeweils einen Kommunikationskanal tragen, zerlegt wird, **dadurch gekennzeichnet, dass** sie Mittel (51') für die Speicherung eines empfangenen Referenzmusters, welches die N Rahmen enthält, die dem aktuellen Block von komprimierten Daten vorangehen, wobei N größer als 1 ist, umfasst,
und mit der Maßgabe, dass diesem Kanal der aktive Zustand, beziehungsweise der statische Zustand, zugewiesen wird, wenn der Vergleich des Inhalts dieses Kanals in den N Bits, verglichen zwischen den N Rahmen des Referenzmusters (71), mit den entsprechenden N Bits der N Rahmen des Analysefensters eine Abweichung des Inhalts für mindestens eines der Bits, beziehungsweise eine Stabilität des Inhalts für die Gesamtheit der N Bits ergibt, wobei die Dekompressionsvorrichtung umfasst:
- Mittel (49) zum Erkennen von Ortungsangaben der aktiven Bits der Datengruppe (441') in einer Datengruppe (441') des Blocks (44'),
- fünfte Mittel (52) zum Speichern der besagten Ortungsangaben der aktiven Elemente,
- Mittel (48) zum Einfügen der erkannten statischen und aktiven Bits in Abhängigkeit von der jeweils angegebenen Ortung, um die aktuellen Rahmen wieder herzustellen.

15. Verfahren zur Verwaltung von Bandbreitenressourcen in einem Telekommunikationssystem zwischen Verkehrsstationen, welche Datenblöcke (44') über eine Satellitenverbindung übertragen, wobei ein solcher Datenblock eine Gruppe (441') von ausgehend von einem Satz von Datenrahmen (60), die eine gemäß einer Mehrzahl von Zeitabständen definierte Struktur aufweisen, komprimierten Daten enthält, wobei eine erste Gruppe von Zeitabständen derart gewählt wird, dass ein jeder der Zeitabstände gemäß einer Mehrzahl von Informationsbits, welche jeweils einen Kommunikationskanal tragen, zerlegt wird, und wobei das besagte System eine Zentrale (10) zur Verwaltung der besagten Ressourcen umfasst,
**dadurch gekennzeichnet, dass** das Verfahren innerhalb mindestens einer Station umfasst:
- Einen Schritt der Analyse des aktiven oder statischen Zustands von in einem Analysefenster (70) der aktuellen Rahmen (60) enthaltenen N Bits, wobei N größer als 1 ist, wobei diesem Kanal der aktive bzw. der statische Zustand zugewiesen wird, wenn der Vergleich des Inhalts dieses Kanals in den N Bits, verglichen zwischen den N Rahmen eines Referenzmusters (71), mit den entsprechenden N Bits der N Rahmen des Analysefensters eine Abweichung des Inhalts für mindestens eines der Bits beziehungsweise eine Stabilität des Inhalts für die Gesamtheit der N Bits ergibt, und wobei das Verfahren auf Ebene der Verwaltungszentrale umfasst:
- Einen Schritt des Empfangens einer Information, welche für die analysierten aktiven Kanäle mindestens eines Datenblocks (44') repräsentativ ist;
- einen Schritt des Zuordnens von Ressourcen für die Station in Abhängigkeit von der besagten Information.

16. Verfahren zur Verwaltung von Ressourcen nach Anspruch 15, **dadurch gekennzeichnet, dass** die übertragene, für die aktiven Bits repräsentative Information aus einer Ressourcenanforderung der besagten mindestens einen Station an die Verwaltungszentrale stammt, die verursachen soll, dass die Übertragungsressourcen der Station variiert, sobald ein Bit vom aktiven Zustand in den statischen Zustand übergeht, oder umgekehrt.

17. Verfahren zur Verwaltung von Ressourcen nach Anspruch 15, **dadurch gekennzeichnet, dass** der Schritt des Empfangens der Information, welche für die analysierten aktiven Bits repräsentativ ist, im Anschluss an einen Schritt des Erkennens der aktiven Bits auf der Übertragungsstrecke der Station im System erfolgt.

18. Verfahren zur Verwaltung von Ressourcen nach einem der Ansprüche 15 bis 17, **dadurch gekennzeichnet, dass** der Schritt Zuordnens von Ressourcen darin besteht, eine Größe von Datenblöcken und/oder eine der Station zugeteilte Übertragungsperiode, welche von der besagten Information abhängt, zu bestimmen, um eine Übertragung zumindest der aktiven Bits zu ermöglichen.

19. Verfahren zur Verwaltung von Ressourcen nach einem der Ansprüche 15 bis 18, **dadurch gekennzeichnet, dass** der Schritt des Zuordnens von Ressourcen für die Station in Abhängigkeit von der besagten Information, gemäß welcher eine zusätzliche Reserve zwischen der Anzahl von aktiven Bits und der Dimensionierung der einer jeden Verbindung der Stationen des Systems zugeordneten Ressourcen zweckmäßig berücksichtigt wird, erfolgt.

20. Verfahren zur Verwaltung von Ressourcen nach einem der Ansprüche 15 bis 19, **dadurch gekennzeichnet, dass** das besagte System einen Ergänzungsdaten-Manager (401) umfasst, welcher dazu ausgelegt ist, auf der für die besagte mindestens eine Station aufgebauten Verbindung Ergänzungsdaten hinzuzufügen, so dass eine Ressourcenreserve gewährleistet wird.
